# EUROPÄISCHE PATENTANMELDUNG

(11) **EP 4 495 350 A1**
(43) Veröffentlichungstag der Anmeldung: **22.01.2025**
(21) Anmeldenummer: 24189471.6
(22) Anmeldetag: 18.07.2024
(51) Int. Cl.: E04D 1/30, A01G 9/033, E04D 1/34, E04D 11/00, H02S 20/23

(54) **TRÄGERSYSTEM FÜR SCHRÄGDÄCHER**

(30) Priorität: 19.07.2023 DE 102023119054
(71) Anmelder: EWALD DÖRKEN AG, 58313 Herdecke (DE)
(72) Erfinder: Sand, Henning, 42929 Wermelskirchen (DE); Pleuser, Timo, 42929 Wermelskirchen (DE); Kaiser, Uwe, 58313 Herdecke (DE); Müller, Umut, 58095 Hagen (DE)
(74) Vertreter: Freiherr von Foullon, Alexander

(57) **Zusammenfassung**

Gegenstand der Erfindung ist ein Träger zur zumindest bereichsweisen Eindeckung von Schrägdächern und/oder zur Verkleidung von Bauwerken und seine Verwendung.

## Beschreibung

Die vorliegende Erfindung betrifft das technische Gebiet der Dacheindeckungen.

Insbesondere betrifft die vorliegende Erfindung einen Träger sowie ein Trägersystem zur zumindest bereichsweisen Eindeckung von Schrägdächern oder zur Verkleidung von Bauwerken. Weiterhin betrifft die vorliegende Erfindung die Verwendung eines Trägers zur zumindest bereichsweise Eindeckung von Schrägdächern oder zur Verkleidung von Bauwerken.

Schließlich betrifft die vorliegende Erfindung ein Steildach, aufweisend eine zumindest bereichsweise Eindeckung aus erfindungsgemäßen Trägern.

Während Flachdächer in der Regel ohne weiteres mit einer Dachbegrünung oder Solarmodulen ausgerüstet werden können, ist dies bei Schrägdächern nur mit deutlich höherem Aufwand möglich. Insbesondere die Begrünung von Schrägdächern gestaltet sich schwierig, da das Pflanzsubstrat und die Bepflanzung gegen ein Abrutschen gesichert werden müssen. Darüber hinaus gibt es kein System, welches nachträglich einen einfachen Austausch einer Begrünung gegen Solarmodule oder umgekehrt auf Schrägdächern ermöglichen würde. Dies ist unvorteilhaft, da aufgrund der bevorstehenden Umstellungen in der Energieversorgung sowie des Klimawandels zunehmend Solarmodule, insbesondere Photovoltaikmodule, und Dachbegrünungen nachgefragt werden und auch weiterhin an Bedeutung gewinnen werden.

Während es Solarmodule ermöglichen, Wärme und Strom aus Sonnenlicht zu gewinnen und im Falle der Stromerzeugung Strom für den Eigenverbrauch oder sogar zur Einspeisung ins Netz zu gewinnen, ermöglicht eine Dachbegrünung, versiegelte Flächen zumindest ansatzweise wieder zu entsiegeln und Wasser auf dem Dach zurückzuhalten.

Diese Wasserretention von Dachbegrünungen wird zunehmend wichtig, da insbesondere Starkregenereignisse und in der Folge auch Überflutungen durch den Klimawandel mit höherer Wahrscheinlichkeit auftreten und auch an Stärke gewinnen werden.

Darüber hinaus schützt eine Dachbegrünung das Dach auch vor Sonneneinstrahlung und verlängert somit die Lebens- bzw. Einsatzdauer der darunter liegenden Materialien.

Weiterhin wird durch eine Dachbegrünung Wasser verdunstet und die Umgebungstemperatur abgesenkt, was einer Aufheizung der Städte entgegenwirkt. Außerdem wird durch Dachbegrünung auch in nicht unerheblichen Maße Kohlenstoffdioxid gespeichert.

Nicht zuletzt reinigt eine Dachbegrünung auch das ablaufende Regenwasser und filtert Schadstoffe aus der Luft und sorgt darüber hinaus auch im Vergleich zu einer reinen Dachdeckung mit Ziegeln oder Betonsteinen für einen verbesserten Schallschutz. Trotz dieser vorteilhaften Wirkung von Dachbegrünung gibt es bis lang kaum Systeme, welche eine zuverlässige Dachbegrünung von Schrägdächern erlauben würde.

Wie zuvor bereits ausgeführt, ist es bei Flachdächern ohne weiteres möglich, diese bereichsweise mit Solarmodulen oder auch einer Dachbegrünung auszurüsten und bei Bedarf die einzelnen Funktionalitäten auf einem Dach zu kombinieren und in ihrer Größe jederzeit zu verändern. Bei Schrägdächern ist dies bislang nicht möglich, was insbesondere daran liegt, dass die Befestigung der Begrünung an der Dachschräge Probleme bereitet. Zwar gibt es Begrünungssysteme für Schrägdächer, diese sind jedoch nur bis max. 25° Dachneigung geeignet und ähneln in ihrem Aufbau Flachdachbegrünungssystem. Für Dachneigungen von über 25° sind diese Systeme jedoch nicht geeignet.

Darüber hinaus beschreibt die WO 2021/028539 A1 ein Aufsatzpflanzsystem zur Begrünung von Dachflächen, bei welchem entweder Aufsatzpflanzkästen auf Ziegel aufgesetzt werden oder der Pflanzkasten in der Form eines Ziegels ausgeführt wird, sodass entweder eine Dachbegrünung von Schrägdächern auf einem bestehenden Ziegeldach möglich ist oder die Dachziegel gegen die Aufsatzpflanzkästen ausgetauscht werden. Die Aufsatzpflanzkästen sind dabei so ausgestaltet, dass sie die Form und das Format eines Ziegels besitzen und wie ein einzelner Ziegel verlegt werden können. Nachteilig an dieser Konstruktion ist jedoch, dass bei Verwendung eines reinen Aufsatzpflanzkasten, welcher zusätzlich zur bestehenden Dachdeckung d.h. auf die Ziegel, aufgebracht wird, das Gewicht der Dacheindeckung stark ansteigt. Bei Ersatz der Dacheindeckung durch die Aufsatzpflanzkästen gemäß der WO 2021/028539 A1 stellt sich das Problem, dass Dachbegrünung in Form kleiner Einheiten, die jeweils so groß sind wie ein einzelner Ziegel, aufgebracht wird, was die Dachbegrünung sehr mühsam macht. Außerdem ist diese Art der Dacheindeckung im Hinblick auf die Form stets nur zu einem bestimmten Dachziegel kompatibel und nicht universell mit verschiedenen Ziegelformen einsetzbar.

Im Bereich der Solarmodule kann der Kunde bzw. Bauträger derzeit zwischen Standard-Solarmodulen wählen, welche mit einer Trägerkonstruktion zusätzlich auf die bestehende Dacheindeckung aufgebracht werden, und Indach-Solarmodulen, welche Ziegel ersetzen, sowie sogenannten Solarziegeln. Solarziegel sind Ziegel deren Oberfläche mit Solarzellen bedruckt bzw. bestückt ist, sodass sich nach dem Verlegen die Dachhaut kaum von einem mit üblichen Ziegeln gedeckten Dach unterscheidet. Nachteilig an Solarziegeln ist jedoch, dass die Ziegel einzeln mit einander verkabelt werden müssen, sodass das System sehr kompliziert und störanfällig ist.

Wünschenswert wäre es, ein großflächiges Dacheindeckungssystem zur Verfügung zu haben, welches wahlweise mit verschieden funktionalen Elementen, wie beispielsweise einer Dachbegrünung oder Solarmodulen, ausgerüstet werden kann, wobei die Funktionalität vorzugsweise nachträglich, d.h. nach Einbau auf dem Dach problemlos getauscht werden kann.

Eine Aufgabe der vorliegenden Erfindung ist somit darin zu sehen, die mit dem zuvor beschriebenen Stand der Technik verknüpften Nachteile zu vermeiden, zumindest jedoch abzuschwächen.

Insbesondere ist eine Aufgabe der vorliegenden Erfindung darin zu sehen, eine Dachdeckung bzw. ein Element für eine Dachdeckung bereitzustellen, welches die flexible Montage von Funktionselementen, wie beispielweise Solarmodulen, oder einer Dachbegrünung, auf einem Schrägdach erlaubt, wobei vorzugsweise eine nachträgliche Änderung der Funktionselemente bzw. ein Austausch der Elemente ohne weiteres möglich ist.

Darüber hinaus ist eine weitere Aufgabe der vorliegenden Erfindung darin zu sehen, ein Element bzw. System bereit zu stellen, welches mit bekannten und verbreiteten Dacheindeckungssystemen kompatibel ist und sich nach Möglichkeit wie ein herkömmliches Dacheindeckungssystem verlegen lässt. Zudem soll möglichst erreicht werden, dass auf eine Schicht in der traditionellen Eindeckung verzichtet werden kann. Heute werden bspw. Solarelemente oder Gründachelemente als zusätzlich Schicht im Aufbau auf die Ziegel aufgesetzt. Dies soll die vorliegende Erfindung nach Möglichkeit überwinden.

Gegenstand der vorliegenden Erfindung gemäß einen ersten Aspekt der vorliegenden Erfindung ist somit ein Träger nach Anspruch 1; weitere, vorteilhafte Ausgestaltung dieses Erfindungsaspekt sind Gegenstand der diesbezügliche Unteransprüche.

Weiterer Gegenstand der vorliegenden Erfindung, gemäß einem zweiten Aspekt der vorliegenden Erfindung, ist Verwendung eines erfindungsgemäßen Trägers nach Anspruch 15.

Wiederum weiterer Gegenstand der vorliegenden Erfindung, gemäß einem dritten Aspekt der vorliegenden Erfindung ist ein Steildach nach Anspruch 16.

Es versteht sich von selbst, dass Besonderheiten, Merkmale, Ausgestaltungen und Ausführungsformen sowie Vorteile oder dergleichen, welche nachfolgend - zu Zwecken der Vermeidung unnötiger Wiederholungen - nur zu einem Erfindungsaspekt ausgeführt werden, selbstverständlich in Bezug auf die übrigen Erfindungsaspekte entsprechend gelten, ohne dass dies einer ausdrücklichen Erwähnung bedarf.

Zudem gilt, dass bei allen nachstehend genannten relativen bzw. prozentualen, insbesondere gewichtsbezogenen Mengenangabe zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew. -% resultieren. Dies versteht sich für den Fachmann aber von selbst.

Weiterhin gilt, dass alle im Folgenden genannten Parameterangaben oder der gleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist somit ein Träger zur zumindest bereichsweisen Eindeckung von Schrägdächern oder zur Verkleidung von Bauwerken, vorzugsweise zur Eindeckung von Schrägdächern, wobei der Träger einen Grundkörper zur Aufnahme und/oder Befestigung von Funktionselementen aufweist.

Bei dem Träger handelt es sich vorzugsweise um ein Eindeckungselement, welches als einheitliches Eindeckungs- bzw. Verkleidungselement für vorzugsweise, aber nicht ausschließlich, geneigte Dächer, d.h. Schrägdächer verwendet werden kann. Der Träger kann aber auch zur zumindest bereichsweisen Verkleidung von Bauwerken oder Gebäudeteilen, wie Mauern, Pfeilern oder Wänden, eigesetzt werden. Der Träger kann somit auch an vertikalen Flächen eingesetzt werden. Der erfindungsgemäße Träger erlaubt insbesondere den universellen Ausbau von Dächern, insbesondere Schrägdächern zum Gründach sowie zum Photovoltaik-(PV-)/Solarthermie-Dach und/oder zum Retentionsdach, wobei insbesondere die klassischen Ziegel und Betondachsteine ersetzt werden.

Der Träger kann vorzugsweise an Bauwerken mit einem Neigungswinkel im Bereich von 15 bis 90°, insbesondere 25 bis 90°, vorzugsweise 30 bis 90°, eingesetzt werden, wobei ein Neigungswinkel von 90° einer vertikalen Fläche entspricht.

Der erfindungsgemäße Träger ist vorzugsweise kompatibel mit gängigen Ziegelformen, sodass das System jederzeit zumindest bereichsweise auf Bestandsdächern nachgerüstet werden kann. Insbesondere ermöglicht der erfindungsgemäße Träger auch den Austausch verschiedener Funktionselemente gegeneinander, d.h. insbesondere die nachträgliche funktionelle Umwandlung von Dachflächen, beispielsweise von einem Photovoltaik-/Solarthermiedach zu einem Gründach oder umgekehrt. Wenn keine Funktionalität gewünscht ist, können beispielsweise Blindelemente auf den Trägern angebracht werden, sodass die Dachhaut einem üblichen Dach entspricht.

Der erfindungsgemäße Träger bzw. das erfindungsgemäße Eindeck- bzw. Verkleidungselement vereint die bisher separaten Systemaufbauten von Gründach und Photovoltaik-/Solarthermie-Dach und ermöglicht so eine vielfältige und flexible Dacheindeckung allein durch den Dachdecker. Die universelle Einsatzmöglichkeit des erfindungsgemäßen Trägers bzw. erfindungsgemäßen Eindeck- bzw. Verkleidungselements erlaubt eine flexible Dachgestaltung und verbindet die Vorteile der bisherigen Einzelsysteme. Der erfindungsgemäße Träger bzw. das erfindungsgemäße Element kann allein durch Dachdecker installiert werden, wodurch eine Beschädigung der Dachdeckung durch Fremdgewerke ausgeschlossen wird.

Unter einen Schrägdach ist im Rahmen der vorliegenden Erfindung ein Dach mit zumindest einer geneigten Dachfläche zu verstehen.

Vorzugsweise weist zumindest eine Seite des Daches eine Dachneigung im Bereich von 15 bis 80°, insbesondere 25 bis 70°, vorzugsweise 30 bis 60°, auf. Der erfindungsgemäße Träger bzw. das erfindungsgemäße Eindeck- bzw. Verkleidungselement kann jedoch auch zur Abdeckung bzw. Verkleidung von vertikalen Strukturen, beispielsweise Mauern, insbesondere Hauswänden oder Schallschutzwänden, und Pfeilern, verwendet werden.

Der erfindungsgemäße Träger bzw. das erfindungsgemäße Eindeck- bzw. Verkleidungselement ist modular aufgebaut, sodass es für eine Vielzahl an Einsatzzwecken, wie beispielsweise zur Dachbegrünung, als Retentionsdach oder Solardach, geeignet ist. Vorzugsweise bildet der erfindungsgemäße Träger bzw. das Eindeck- und/oder Verkleidungselement ein Trägersystem, welches eine flexible und leicht änderbare Funktionalität der Dachoberfläche ermöglicht, wobei vorzugsweise bereichsweise Änderungen auf der Dachfläche möglich sind.

Im Rahmen der vorliegenden Erfindung ist das Funktionselement üblicherweise ausgewählt aus Dachbegrünung, insbesondere Pflanzkästen, Photovoltaikmodulen, Solarthermiemodulen, Wärmepumpen, Klimageräten, Lüftungsgeräten und Blindelementen. Besonders bevorzugt ist das Funktionselement ausgewählt aus Dachbegrünung, Photovoltaikmodulen, Solarthermiemodulen und Blindelementen. Besonders gute Ergebnisse werden in Rahmen der vorliegenden Erfindung erhalten, wenn das Funktionselement ausgewählt ist aus Dachbegrünung, Photovoltaikmodulen und Blindelementen.

Bei einem Blindelement handelt es sich um eine Blende die an bzw. auf dem Träger befestigt wird. Durch das Blindelement lässt sich somit eine geschlossene und optisch ansprechende Dachhaut erzeugen, wobei das Blindelement Ziegeln oder anderen Dacheindeckungen, beispielsweise Blechen, nachempfunden sein kann. Das Blindelement kann aus einer Vielzahl von Materialen bestehen. Es hat sich jedoch bewährt, wenn das Blindelement aus Holz, Kunststoff, Metall oder deren Mischungen besteht, insbesondere Kunststoff, Metall und deren Mischungen. Ein besonders bevorzugtes Material für die Blindelemente sind Aluminiumverbundplatten, welche eine Kunststoffkern aufweisen, auf den auf eine oder zwei Seiten Aluminiumbleche laminiert sind.

Wie zuvor bereits ausgeführt, ermöglicht der erfindungsgemäße Träger bzw. das erfindungsgemäße Eindeckelement einen schnellen Austausch der Funktionselemente, und dies auch nachträglich, d.h. im bereits verbauten Zustand.

Was nun den Grundkörper des Trägers bzw. Eindeckelements anbelangt, so ist es üblich, wenn dieser in Form eines nach oben offenen Kastens vorliegt.

Vorzugsweise ist der Grundkörper rechteckig ausgebildet und nach oben, d.h. der im verbauten Zustand dem Gebäude abgewandten Seite, offen.

Die Seitenwände des Grundkörpers können dabei so ausgebildet sein, dass alle Seitenwände dieselbe Höhe aufweisen, d.h. ein Grundkörper mit einer einheitlichen Seitenwandhöhe erhalten wird.

Alternativ kann es auch vorgesehen sein, dass die Seitenwände des Grundkörpers unterschiedliche Höhen aufweisen. Insbesondere ist es dabei bevorzugt, wenn Kopf- und Fußseite des Trägers bzw. Grundkörpers, d.h. die Seiten, die dazu vorgesehen sind, im Anwendungsfall, also bei Installation des erfindungsgemäßen Trägers auf einem Dach, First bzw. Traufe zugewandt zu sein, unterschiedliche Höhen aufweisen. Vorzugsweise weist dabei die Kopfseite bzw. die dem First zugewandte Seite eine geringere Höhe als die Fußseite bzw. die der Traufe zugewandte Seite auf. Diesbezüglich hat es sich beispielsweise bewährt, wenn die Differenz der Höhen von Kopf- und Fußseite des Grundkörpers in einem Bereich von 0,3 bis 7 cm, insbesondere 0,5 bis 5,5 cm, vorzugsweise 0,75 bis 4,5 cm, bevorzugt 1 bis 4 cm, liegt. Die Kopf- und Fußseite verknüpfenden Seitenwände bzw. die Längsseiten des Grundkörpers sind in dieser Ausführungsform dann so beschaffen, dass die Höhendifferenz überbrückt bzw. ausgeglichen wird, d.h. die Seitenwände weisen eine von der Kopf- zur Fußseite zunehmende Höhe auf, sind also im Wesentlichen keilförmig ausgebildet.

Im Rahmen der vorliegenden Erfindung ist es darüber hinaus üblicherweise vorgesehen, dass der Grundkörper funktionale Einrichtungen aufweist. Der Grundkörper kann mit einer Vielzahl funktionaler Einrichtungen ausgestellt werden und flexibel auf die jeweiligen Anwendungszwecke angepasst zu werden.

Üblicherweise sind die funktionalen Einrichtungen ausgewählt aus der Gruppe von Retentionseinrichtungen, Trenneinrichtungen, Befestigungseinrichtungen oder deren Mischungen.

Besonders gute Ergebnisse werden dabei erhalten, wenn der Grundkörper funktionale Einrichtungen in Form von Noppen, Stegen, Trennwänden, Befestigungseinrichtungen, Nuten oder deren Mischung aufweist.

Bei Noppen und Stegen handelt es sich insbesondere um Retentionseinrichtungen, welche einen verzögerten Abfluss Wassers vom Dach bewirken.

Besonders gute Ergebnisse werden erhalten, wenn die Befestigungseinrichtungen, Einrichtungen zur Befestigung der Funktionselemente sind. Vorzugsweise sind die Befestigungseinrichtungen ausgewählt aus der Gruppe von Einrichtungen zur Herstellung von Klemmverbindungen, Steckverbindungen, Rastverbindungen, Schraubverbindungen oder deren Mischungen.

Was zum Beispiel die Befestigung von Einsatz- bzw. Pflanzkästen bzw. auch von anderen funktionalen Elementen, wie PV- oder Solarthermiemodulen, anbelangt, so hat es sich erfindungsgemäß bewährt, wenn der Grundkörper, insbesondere kopf- und/oder fußseitig, ein oder mehrere Befestigungseinrichtungen aufweist.

Erfindungsgemäß hat es sich hierbei bewährt, wenn fußseitig, insbesondere entlang der Fußseite des Grundkörpers, eine, insbesondere innenliegende, Befestigungsschiene in dem Grundkörper angeordnet ist. Entlang dieser Befestigungsschiene können die Einsatz- bzw. Pflanzkästen mit dem Grundkörper bzw. Träger insgesamt unkompliziert verbunden und fixiert werden.

Bevorzugt ist hierbei eine lösbare Verbindung von Funktionselement und Grundkörper. Die Befestigung kann daher beispielsweise mittels der oben genannten Verbindungen und/oder über einen Einhäng- bzw. Einhakmechanismus erfolgen. Der Einsatz- bzw. Pflanzkasten verfügt in diesem Fall vorteilhaft über eine entsprechend komplementär ausgebildete Einhäng- bzw. Einhakschiene. Auf diese Weise wird leicht und flexibel eine sicherer Anordnung von Einsatz- bzw. Pflanzkästen in dem erfindungsgemäßen Grundkörper bzw. Träger erreicht. Vorteilhaft sind hierbei keine Bohrungen oder zusätzlichen Befestigungsmittel wie Schrauben oder dergleichen erforderlich. Vielmehr ist es möglich, die Einsatz- bzw. Pflanzkästen unkompliziert in den erfindungsgemäßen Träger "einzuklicken", d.h. einzuhängen bzw. -zuhaken, wodurch die Einsatz- bzw. Pflanzkästen in dem Grundkörper bzw. Träger anwenderfreundlich zu positionieren sowie hinreichend gesichert sind.

Gleichermaßen kann es sich anbieten, dass kopfseitig des Grundkörpers Befestigungseinrichtungen vorgesehen sind. Bevorzugt sind diese im Rahmen der vorliegenden Erfindung als einzelne, lösbar mit dem Träger verbindbare bzw. verbundene, Befestigungselemente ausgebildet. Besonders bevorzugt sind diese Befestigungselemente Befestigungsklammern bzw. -klemmen.

Diese Befestigungsklammern sind vorteilhaft so beschaffen, dass diese unter den kopfseitigen Rahmen des erfindungsgemäßen Trägers und/oder über den Rand eines Funktionselements, insbesondere eines Einsatz- bzw. Pflanzkastens, reichen. Die Klammern können demnach vorteilhaft insbesondere im Bereich von Leitungen bzw. Rinnen oder auch Untergurten des Grundkörpers des erfindungsgemäßen Trägers angewendet und angebracht werden, um dort unter den Rahmen des Trägers einzuhaken. Durch diese zusätzliche Sicherung ist das Funktionselement bzw. der Einsatz- bzw. Pflanzkasten nochmals intensiver gegen ein Verrutschen oder gar Herausfallen aus dem Träger in dem Rahmen gesichert.

Darüber hinaus ist es auch möglich, zusätzliche Befestigungseinrichtungen, wie etwa Befestigungsschienen, auf dem Grundkörper vorzusehen, insbesondere wenn eine besonders widerstandsfähige bzw. äußerst belastbare Verbindung von Träger und Funktionselement erforderlich ist. Dies kann beispielsweise für die Installation von Photovoltaikanlangen der Fall sein.

Eine alternative Ausführung entsprechender auf dem Grundkörper vorgesehener Befestigungseinrichtungen kann schließlich sog. Befestigungsteller vorsehen bzw. insbesondere zur Aufnahme dieser ausgebildet sein, wodurch wiederum eine besonders widerstandsfähige und belastbare zusätzliche Sicherung von Funktionselementen in dem Träger erreicht werden kann.

Gemäß einer bevorzugten Ausführungsform der vorliegenden Erfindung weist der Grundkörper mindestens eine Nut, insbesondere ein Nutsystem, auf.

Das Vorhandensein von Nuten, insbesondere eines Nutsystems, ermöglicht zum einen das flexible einsetzen von Trenn- und Dichtwänden, sodass der Träger und der Grundkörper beispielsweise am Dachrand oder im Bereich von Dachauf- und Dacheinbauten, wie beispielsweise Dachfenstern oder Schornsteinen, flexibel angepasst, insbesondere in seiner Ausdehnung angepasst werden kann, beispielsweise durch Schneiden oder Sägen, und anschließend die Dichtigkeit und die Funktion des Trägers bzw. des Eindeck- und/oder Verkleidungselements wiederhergestellt wird. Zum anderen können über ein Nutsystem aber auch andere funktionelle Einrichtungen, wie beispielsweise Befestigungseinrichtungen, insbesondere Einrichtungen zur Befestigung der Funktionselemente, flexibel im Grundkörper des Trägers angebracht werden.

Weiterhin kann es vorgesehen sein, dass der Träger Einrichtung zur Weiterleitung von Flüssigkeit und/oder Gasen, insbesondere von Wasser und/oder Luft, vorzugsweise Wasser, aufweist.

Die Einrichtung zur Weiterleitung für Flüssigkeiten und/oder Gasen sind gemäß einer ersten bevorzugten Ausführung der vorliegenden Erfindung vorzugsweise in der Form von Durchlassöffnungen in den Außenwänden des Grundkörpers vorgesehen. Vorzugsweise sind diese Einrichtungen zur Weiterleitung von Flüssigkeiten und/oder Gasen an den Kopf- und/oder Fußseiten, insbesondere an den Kopf- und Fußseiten, der Träger angebracht. Vorzugsweise weisen die Einrichtungen zur Weiterleitung der Flüssigkeiten und/oder Gase zumindest an der Fußseite des Trägers bzw. des Grundkörpers Verlängerungen auf, insbesondere in Form von Röhren bzw. Rohren. Hierdurch wird eine flexible Verbindung der einzelnen Grundkörper und eine Weiterleitung von Flüssigkeiten und/oder Gasen, insbesondere Luft und Wasser, von einen Grundkörper bzw. Träger in einen weiteren Grundkörper bzw. Träger ermöglicht.

Im Falle einer Verwendung als Gründachanwendung wird insbesondere Wasser durch die Grundkörper weitergeleitet und bei der Verwendung als PV- oder Solarthermie-Dach kann einerseits Regenwasser von einem Grundkörper in einen weiteren weitergeleitet werden und so problemlos, wenngleich vorzugsweise zeitverzögert, abfließen, andererseits kann auch Luft aufsteigen und die Solarmodule kühlen.

Gemäß einer alternativen bevorzugten Ausführung der vorliegenden Erfindung ist die Einrichtung zur Weiterleitung für Flüssigkeiten und/oder Gasen vorzugsweise in den Grundkörper, insbesondere in den Boden des Grundkörpers, integriert.

Vorzugsweise ist/sind die Einrichtung(en) zur Weiterleitung für Flüssigkeiten und/oder Gasen beispielsweise in Form von in den Grundkörper bzw. insbesondere dessen Boden integrierten Leitungen oder Rinnen ausgebildet. Die integrierten Einrichtungen erstrecken sich ferner vorteilhaft von der Kopf- zur Fußseite des Trägers entlang des Grundköpers.

Es hat sich im Rahmen dieser Ausführungsform bewährt, wenn der Grundkörper bzw. insbesondere dessen Boden mehrere Einrichtungen zur Weiterleitung für Flüssigkeiten und/oder Gasen aufweist. Vorteilhaft sind diese in regelmäßigen Abständen in dem Grundkörper(-boden) verteilt angeordnet. Ein entsprechender Grundkörper weist also vorzugsweise eine Mehrzahl von regelmäßig zueinander beabstandeten Leitungen oder Rinnen, insbesondere in dem Boden des Grundkörpers, auf, die sich bevorzug von der Kopf- zur Fußseite des Trägers entlang des Grundkörpers erstrecken.

Anfallende Flüssigkeit bzw. auch Gase können so im Grundkörper gesammelt und effizient abgeleitet werden, insbesondere so, dass keine überschüssige Flüssigkeit im Grundkörper bzw. Träger zurückgehalten wird. Vielmehr kann sämtliche überschüssige Flüssigkeit im Träger versickern und so in den Grundkörper und über dessen Boden abgeleitet werden.

Vorteilhaft sind die Einrichtungen zur Weiterleitung für Flüssigkeiten und/oder Gasen dabei so ausgestaltet, dass diese in einem Verbund erfindungsgemäßer Träger bündig miteinander angeordnet werden können, so dass über die gesamte abgedeckte Fläche kontinuierliche Einrichtungen zur Weiterleitung für Flüssigkeiten und/oder Gasen erhalten werden, über welche Flüssigkeiten wie bspw. (Regen-)Wasser zuverlässig unterhalb eventueller Einsatz- bzw. Pflanzkästen in dem Grundkörper(-boden) gesammelt sowie transportiert werden kann und bspw. in eine Regenrinne geleitet werden kann.

Im Rahmen einer besonders bevorzugten Ausgestaltung der vorliegenden Erfindung ist der Grundkörper mit, insbesondere in den Boden des Grundkörpers, integrierten Einrichtungen zur Weiterleitung für Flüssigkeiten und/oder Gasen in Form eines Trapezbleches ausgebildet bzw. weist der Grundkörper, insbesondere der Boden des Grundkörpers, eine Mehr- bzw. Vielzahl von alternierenden Obergurten und Untergurten auf. Hierbei bilden die Untergurte vorteilhaft die in den Grundkörper(-boden) integrierten Einrichtungen zur Weiterleitung für Flüssigkeiten und/oder Gasen.

In den Untergurten kann dabei überschüssige Flüssigkeit zuverlässig gesammelt sowie abgeleitet werden. Der Grundkörper bzw. insbesondere die Trapezbleche mehrerer erfindungsgemäßer Träger können vorteilhaft so angeordnet werden, dass Ober- und Untergurte kontinuierlich ineinander übergehen, d.h. sich über die gesamte abgedeckte Fläche erstrecken, so dass Flüssigkeit gezielt und kontinuierlich vom Dach abgeleitet werden kann, ohne dass sich überschüssige Flüssigkeit anstauen kann.

Gleichermaßen vorteilhaft ist im Rahmen dieser Ausführungsform eine vergleichsweise intensive Belüftung eventueller Funktionselemente, bspw. von Einsetz- bzw. Pflanzkästen oder auch von in dem Träger angeordneten PV- oder Solarthermieanlagen oder -modulen möglich.

Wenn im Rahmen der vorliegenden Erfindung Träger mit einem Grundkörper mit insbesondere in dem Grundkörperboden integrierten Einrichtungen zur Weiterleitung für Flüssigkeiten und/oder Gasen verwendet werden, so hat es sich diesbezüglich für eventuelle Funktionselemente, insbesondere für Einsatz- bzw. Pflanzkästen, bewährt, wenn diese ebenfalls bzw. zusätzlich zur Ableitung von überschüssiger Flüssigkeit, selbst mit Einrichtungen zur Weiterleitung für Flüssigkeiten versehen sind, insbesondere in Form von Durchlassöffnungen in den Außenwänden der Einsetz- bzw. Pflanzkästen, wie nachfolgend noch eingehender erläutert. Vorzugsweise sind diese Einrichtungen zur Weiterleitung für Flüssigkeiten dabei traufseitig angeordnet, um eine effektive Weiter- bzw. Ableitung von Flüssigkeit zu gewährleisten.

Im Rahmen der vorliegenden Erfindung ist es darüber hinaus üblicherweise vorgesehen, dass der Träger mit einer üblichen Dacheindeckung kombinierbar ist.

Insbesondere ist der Träger vorzugsweise mit handelsüblichen Dachpfannen, wie beispielsweise Dachziegeln und Betonsteinen, kombinierbar. Dies ermöglicht einen teilweisen Austausch der ursprünglichen Dachdeckung gegen das erfindungsgemäße Träger- bzw. Eindeck- und/oder Verkleidungssystem und somit eine flexible kostengünstige Dachgestaltung, wobei eine Vielzahl an Gestaltungsmöglichkeiten und Kundenwünschen umgesetzt werden kann.

Im Rahmen der vorliegenden Erfindung ist es vorzugsweise vorgesehen, dass der Träger mindestens eine Befestigungseinrichtung zur Befestigung des Trägers an einen Schrägdach oder einem Bauwerk und/oder zur Befestigung des Trägers an mindestens einen weiteren Träger und/oder an einer üblichen Dacheindeckung aufweist. Der erfindungsgemäße Träger bzw. das erfindungsgemäße Eindeck- und/oder Verkleidungselement sollte vorzugsweise direkt an dem Schrägdach oder dem Bauwerk befestigt werden. Durch den modularen Aufbau ist der Träger bzw. das Eindeck- und/oder Verkleidungselement auch mit weiteren Trägern bzw. Eindeck- und/oder Verkleidungselementen oder üblichen Dacheindeckungen kombinierbar. Dies kann etwa durch Verschraubungspunkte in der Grundplatte des Deckelements erreicht werden.

Besonders gute Ergebnisse werden im Rahmen der vorliegenden Erfindung erhalten, wenn der Träger mindestens ein Falzteil aufweist. In diesen Zusammenhang hat es sich bewährt, wenn das Falzteil ein Kopffalzteil und/oder ein Seitenfalzteil aufweist. Vorzugsweise weist das Falzteil ein Kopffalzteil und ein Seitenfalzteil auf.

Gemäß einer besonders bevorzugten Ausführungsform der vorliegenden Erfindung sind das Kopf- und das Seitenfalzteil einstückig ausgebildet. Durch die Verwendung eines Falzteils, welches insbesondere aus Kopf und Seitenfalzteil besteht, ist es möglich, die Träger wie Dachziegel zu verlegen und darüber hinaus auch einen flexiblen Abstand zwischen den einzelnen Trägern bzw. Eindeck- und/oder Verkleidungselementen vorzunehmen.

Weiterhin erlauben Kopf- und Seitenfalzteil auch eine einfache Kombination des Trägers bzw. Eindeck- und/oder Verkleidungselements mit üblichen Dacheindeckungen in Form von Dachziegeln bzw. Betondachsteinen.

Darüber hinaus weist der Träger bzw. das Eindeck- und/oder Verkleidungselement vorzugsweise auch ein Fußfalzteil auf. Durch die Seiten-, Kopf- sowie Fußverfalzung ist für die Dichtigkeit der Überdeckung der einzelnen Träger bzw. Eindeckelemente ohne zusätzliche Verwendungen von Dichtungen gesorgt. Aufgrund der Verschiebbarkeit der Träger bzw. Elemente ist eine variable Eindeckung gemäß der Lattungs- und Sparrenabstände sowie der Gebäudebreite möglich. Da der Träger bzw. das Eindeckelement kompatibel mit gängigen Ziegelformen ist, kann das System jederzeit, nicht zwangsweise flächendeckend, auf Bestandsgebäuden nachgerüstet werden.

Gemäß einer weiteren bevorzugten Ausführungsform ist es vorgesehen, dass das Falzteil, insbesondere das Kopffalzteil, eine aus der Ebene des Falzteils nach unten auskragende Ausbuchtung, insbesondere Aufhängenase, aufweist. Durch die Aufhängenase kann den Träger bzw. das Eindeckelement an der Konterlattung befestigt werden.

Weiterhin ist es im Rahmen der vorliegenden Erfindung, wie bereits erwähnt, vorzugsweise vorgesehen, dass der Grundkörper zur Aufnahme eines oder mehrerer, vorzugsweise mehrerer Einsatz- bzw. Pflanzkästen, ausgebildet ist. In diesen Zusammenhang hat es sich bewährt, wenn der Grundkörper zur Aufnahme von 1 bis 20, insbesondere 2 bis 18, vorzugsweise 5 bis 15, bevorzugt 8 bis 15 Einsatz- bzw. Pflanzkästen ausgebildet ist. Besonders bevorzugt ist es im Rahmen der vorliegenden Erfindung, wenn der Grundkörper zur Aufnahme von 2 bis 10, insbesondere 3 bis 8, vorzugsweise 3 bis 5, Einsatz- bzw. Pflanzkästen ausgebildet ist.

Im Hinblick auf den Einsatz- bzw. Pflanzkasten hat es sich erfindungsgemäß dabei als vorteilhaft erwiesen, wenn der Einsatz- bzw. Pflanzkasten eine Höhe im Bereich von 2 bis 13 cm, insbesondere 3 bis 11 cm, vorzugsweise 5 bis 10 cm, bevorzugt 7 bis 9 cm, aufweist. Einsatz- bzw. Pflanzkästen mit den vorgenannten Höhen eignen sich besonders für die Aufnahme von Dachbegrünungen bzw. zur Aufnahme von PV- oder auch Solarthermiemodulen.

Im Rahmen der vorliegenden Erfindung ist der Einsatz- bzw. Pflanzkasten üblicherweise zur Aufnahme einer Dachbegrünung ausgebildet. Alternativ kann der Einsatzkasten auch andere Funktionalitäten aufweisen und bspw. zur Aufnahme von Solarpanelen bzw. Solarthermiemodulen ausgebildet sein.

In diesen Zusammenhang hat es sich bewährt, wenn die Dachbegrünung ein Substrat und eine Bepflanzung aufweist. Das Substrat besteht üblicherweise aus wasserdurchlässigen mineralischen und nährstoffarmen Substraten und die Bepflanzungen in der Regel aus anspruchslosen Pflanzen, welche auch längere Trockenheitsperioden gut überstehen können, wie beispielsweise Sedum.

Im Rahmen der vorliegenden Erfindung hat es sich weiterhin bewährt, wenn der Einsatz- bzw. Pflanzkasten mindestens eine Einrichtung zur Wasserretention aufweist. Gute Ergebnisse werden in diesen Zusammenhang erhalten, wenn die Einrichtung zur Wasserretention ausgewählt aus Noppen und/oder Stegen. Durch die Einrichtung zur Wasserretention wird zum einen verhindert, dass Wasser schnell von der Fläche abfließt und somit bei Starkregen zu Überflutungen beiträgt, zum anderen wird das Wasser auch gespeichert, um längere Zeit ein Wasserreservoir für die Dachbegrünung zu schaffen. Dabei ist insbesondere drauf zu achten, dass Wasserretentionseinrichtungen in regelmäßigen und relativ engen Abständen in den Pflanzkästen vorgesehen sind, da andernfalls die Gefahr besteht, dass sich das Wasser am unteren Ende des Pflanzkasten sammelt und die Dachbegrünung im oberen Teil des Pflanzkastens nicht genügend Wasser erhält.

Weiterhin kann es im Rahmen der vorliegenden Erfindung vorgesehen sein, dass der Einsatz- bzw. Pflanzkasten eine Einrichtung zur Fixierung von Textilmaterialen insbesondere Geweben, Gewirken oder Vliesen, vorzugsweise Vliesen, aufweist. Einrichtungen zur Fixierung von Textilmaterialen können beispielsweise in Formen von Haken oder Dornen, welche vom Boden des Grundkörpers aufragen, ausgebildet sein. Textilmaterialien können insbesondere verwendet werden, um zu verhindern, dass bei starkem Wind die Dachbegrünung mit Teilen des Substrats aus dem Pflanzkasten gerissen wird.

Ein bevorzugter Aufbau des Einsatz- bzw. Pflanzkastens sieht daher wie folgt aus. Am Boden des Einsatz- bzw. Pflanzkasten befinden sich Retentionseinrichtungen zur Zurückhaltung von Wasser, insbesondere Form von Noppen und/oder die Stegen. Darüber ist ein Vlies angebracht und es folgt die Substratschicht. Optional kann dann ein weiteres Vlies aufgebracht sein, welches dem Schutz des Substrates dient. Darüber ist dann die Begrünung angeordnet, wobei die Begrünung mit ihren Wurzeln durch ein eventuell vorhandenes Vlies in das Substrat hineinreicht.

Besonders bevorzugt werden die Einsatz- bzw. Pflanzkäsen in bereits bepflanztem Zustand in den Grundkörpers des Trägers bzw. des Eindeckelements eingesetzt. Diese ermöglicht eine sehr rasche Dachbegrünung und garantiert, dass die Pflanzkästen auch tatsächlich begrünt werden. Eine Bepflanzung durch den Dachdecker oder einen Gärtner auf den Dach wäre einerseits sehr aufwendig und es ist andererseits ungewiss, ob die Pflanzen tatsächlich anwachsen bzw. sich Keimlinge entwickeln.

Gemäß einer besonders bevorzugten Ausführungsform der vorliegenden Erfindung weist der Einsatz- bzw. Pflanzkasten Aussparungen und/oder Durchbrechung zu Weiterleitung von Flüssigkeiten, insbesondere Wasser, auf. Die Aussparung und/oder Durchbrechung sind insbesondere an den Kopf- und/oder Fußseiten der Einsatz- bzw. Pflanzkästen, insbesondere der Kopf- und Fußseiten der Pflanzkästen, angeordnet. Weiterhin ist es vorzugsweise vorgesehen, dass die Aussparungen bzw. Durchbrechungen an einer Seite des Pflanzkastens einen Überstand aufweisen. Der Überstand ist vorzugsweise derart ausgebildet, dass er formschlüssig in die Aussparung und/oder Durchbrechung eines weiteren Pflanzkastens eingeführt werden kann, so dass kein Wasser zwischen die Pflanzkästen laufen kann.

Wie zuvor bereits ausgeführt, weist der Träger vorzugsweise Einrichtung zur Weiterleitung von Flüssigkeit und/oder Gasen, insbesondere von Wasser und/oder Luft, vorzugsweise Wasser, auf. Im Falle einer als Gründachanwendung kann insbesondere Wasser durch die Grundkörper weitergeleitet und bei der Verwendung als PV- oder Solarthermie-Dach kann einerseits Regenwasser von einem Grundkörper in einen weiteren weitergeleitet werden und so problemlos, wenngleich vorzugsweise zeitverzögert, abfließen, andererseits kann auch Luft aufsteigen und die Solarmodule kühlen.

Gemäß einer weiteren Ausführungsform der vorliegenden Erfindung kann es dabei auch vorgesehen sein, dass der an der Unterseite des Solarmoduls bzw. der Solarmodule vorbeigeleitete Luftstrom gesammelt und einer Wärmepumpe zugeführt wird, um deren Effizienz zu steigern.

Was nun die Abmessung des Trägers anbelangt, so ist es vorzugsweise vorgesehen, dass der Träger eine Länge im Bereich von 100 bis 150 cm, vorzugsweise 100 bis 130 cm, bevorzugt 120 cm, aufweist. Gleichermaßen kann es vorgesehen sein, dass der Träger eine Breite im Bereich von 60 bis 100 cm, vorzugsweise 70 bis 90 cm, bevorzugt 80 cm, aufweist. Der Träger weist vorzugsweise in etwa die Ausmaße einer Euro-Palette auf, wodurch ein besonders einfacher Transport möglich ist.

Alternativ kann es gleichermaßen auch vorgesehen sein, dass der Träger eine Breite im Bereich von 100 bis 150 cm, vorzugsweise 100 bis 130 cm, bevorzugt 120 cm, aufweist, und eine Länge im Bereich von 60 bis 100 cm, vorzugsweise 70 bis 90 cm, bevorzugt 80 cm, aufweist. Hierbei weist der Träger auch im Rahmen dieser Alternative vorzugsweise in etwa die Ausmaße einer Euro-Palette auf, insbesondere zur Transporterleichterung.

Gleichermaßen kann es jedoch auch vorgesehen sein, dass der Grundkörper die Abmessung eines Solarmoduls aufweist oder das die Länge und/oder Breite des Grundkörpers der halben Länge und/oder der halben Breite eines Solarmoduls entspricht. Vorzugsweise kann somit jeweils ein Solarmodul auf einem Grundkörper des Trägers befestigt werden. Gleichermaßen ist es jedoch auch möglich, ein Solarmodul auf mehreren Trägern, insbesondere Grundkörpern, zu befestigen.

Im Rahmen der vorliegenden Erfindung hat es sich darüber hinaus bewährt, wenn der Träger eine Höhe im Bereich von 2 bis 20 cm, insbesondere 3 bis 15 cm, vorzugsweise 5 bis 12 cm, bevorzugt 5 bis 11 cm, bevorzugt 5 bis 10 cm, aufweist. Diese Höhenbereiche eigenen sich in besonderer Weise einerseits für eine extensive Dachbegrünung und ermöglichen andererseits eine ausreichende Wasserretention sowie die Möglichkeit der Installation von PV- oder Solarthermiemodulen. Darüber hinaus wird auch gewährleistet, dass auch beim starken Regen die Belastung der Dachkonstruktion durch das Gewicht des Wassers nicht zu hoch wird.

Wenn in den Grundkörper des Trägers ein oder mehrere Einsatz- bzw. Pflanzkästen aufgenommen sind, dann hat es sich erfindungsgemäß als vorteilhaft erwiesen, wenn die Gesamthöhe von Träger und Einsatz- bzw. Pflanzkasten eine Höhe im Bereich von 4 bis 26 cm, insbesondere 6 bis 22 cm, vorzugsweise 8 bis 18 cm, bevorzugt 9 bis 15 cm, bevorzugt 10 bis 14 cm, aufweist.

Was das Material anbelangt, aus welchen der Träger bzw. das Eindeck- und/oder Verkleidungselement besteht, so kann dieses aus einer Vielzahl von Materialien ausgewählt werden. Insbesondere wird der Träger bzw. das Eindeck- und/oder Verkleidungselement aus kunststoffhaltigen Materialien hergestellt. Gemäß einer besonders bevorzugten Ausführungsform besteht das Element aus einem faserverstärkten Kunststoff, insbesondere einem glasfaserverstärkten Kunststoff. In diesem Zusammenhang hat es sich bewährt, wenn der Kunststoff ausgewählt ist aus Hochleistungskunststoffen, Polyolefinen, insbesondere Polypropylen oder Polyethylen, oder recycelten Kunststoffen, vorzugsweise recycelten Kunststoffen. Faserverstärkte Kunststoffe haben, aufgrund des geringen Gewichts den Vorteil, dass sie den Dachaufbau nicht unnötig beschweren und die Träger gut handhabbar sind. Insbesondere für die Verwendung von recycelten Kunststoffen wird die Nachhaltigkeit des Systems nochmals verbessert.

Weiterer Gegenstand der vorliegenden Erfindung - gemäß einem **zweiten** Aspekt der vorliegenden Erfindung - ist die Verwendung eines zuvor beschriebenen Trägers zur zumindest bereichsweise Eindeckung von Steildächern oder Bauwerken, vorzugsweise zur zumindest bereichsweisen Eindeckung von Steildächern.

Für weitergehende Einzelheiten zu diesen Erfindungsaspekt kann auf die obigen Ausführungen zum erfindungsgemäßen Träger verwiesen werden, welcher für die erfindungsgemäße Verwendung entsprechend gilt.

Wiederum weiterer Gegenstand der vorliegenden Erfindung - gemäß einem **dritten** Aspekt der vorliegenden Erfindung - ist ein Steildach, aufweisend eine zumindest bereichsweise Eindeckung mit zuvor beschriebenen Trägern.

Für weitere Einzelheiten zu diesem Erfindungsaspekt kann auf die obigen Ausführungen zu den weiteren Erfindungsaspekten verwiesen werden, welche in Bezug auf das erfindungsgemäße Steildach entsprechend gelten.

Es zeigen die Figurendarstellungen Gemäß
- Fig. 1:: einen erfindungsgemäßen Träger in Draufsicht;
- Fig. 2:: eine perspektivische Darstellung eines erfindungsgemäßen Trägers;
- Fig. 3a:: eine Seitenansicht eines erfindungsgemäßen Trägers mit Blick auf die Fußseite;
- Fig. 3b:: eine Seitenansicht eines erfindungsgemäßen Trägers mit Blick auf eine der Längsseiten;
- Fig. 4:: einen Ausschnitt aus einem Dachaufbau mit teilweiser Dacheindeckung aus erfindungsgemäßen Trägern;
- Fig. 5:: einen erfindungsgemäßen Träger in der Draufsicht mit Trennwänden;
- Fig. 6:: einen erfindungsgemäßen Träger mit Trennwänden in perspektivischer Darstellung;
- Fig. 7:: eine perspektivische Darstellung eines erfindungsgemäßen Trägers mit Pflanzkästen;
- Fig. 8:: einen bepflanzten Pflanzkasten;
- Fig. 9:: ein unbepflanzten Pflanzkasten mit funktionalen Einrichtungen;
- Fig. 10:: ein unbepflanzten Pflanzkasten mit weiteren funktionalen Einrichtungen;
- Fig. 11:: einen Ausschnitt aus einem Dachaufbau mit erfindungsgemäßen Trägern, welche mit einer Dachbegrünung versehen sind;
- Fig. 12:: ein Ausschnitt aus einem Dachaufbau mit erfindungsgemäßen Trägern, welche mit Solarmodulen versehen sind;
- Fig. 13:: einen Ausschnitt aus einen Dachaufbau mit erfindungsgemäßen Trägern, welche mit Solarmodulen, einer Dachbegrünung und Blindelementen versehen sind;
- Fig. 14:: einen Ausschnitt aus einem Dachaufbau mit erfindungsgemäßen Trägern, welche mit Solarmodulen und einer Wärmepumpe versehen sind;
- Fig. 15:: eine alternative Ausführung eines erfindungsgemäßen Trägers in perspektivischer Darstellung
- Fig. 16:: eine weitere alternative Ausführung eines erfindungsgemäßen Trägers in perspektivischer Darstellung;
- Fig. 17:: eine perspektivische Darstellung des alternativen erfindungsgemäßen Trägers mit einem Einsatz- bzw. Pflanzkasten;
- Fig. 18:: eine perspektivische Darstellung des alternativen erfindungsgemäßen Trägers mit drei Einsatz- bzw. Pflanzkästen;
- Fig. 19:: einen erfindungsgemäßen Träger mit einer Befestigungsschiene in frontalperspektivischer Ansicht;
- Fig. 20:: eine Frontansicht zweier miteinander verbundener erfindungsgemäßer Träger;
- Fig. 21:: eine Seitenansicht zweier miteinander verbundener erfindungsgemäßer Träger;
- Fig. 22:: eine perspektivische Darstellung des alternativen erfindungsgemäßen Trägers mit einem Einsatz- bzw. Pflanzkasten und diesbezüglichen Befestigungselementen;
- Fig. 23:: eine Seitenansicht der firstseitigen Befestigung des Einsatz- bzw. Pflanzkastens in dem Träger;
- Fig. 24:: eine Seitenansicht der traufseitigen Befestigung des Einsatz- bzw. Pflanzkastens in dem Träger; und
- Fig. 25:: eine perspektivische Darstellung des alternativen erfindungsgemäßen Trägers mit zwei Pflanzkästen und alternativen diesbezüglichen Befestigungselementen.

Der Gegenstand der vorliegenden Erfindung wird nachfolgend mittels der Figurendarstellung anhand bevorzugter Ausführungsformen in nicht beschränkender Weise eingehender beschrieben und verdeutlicht.

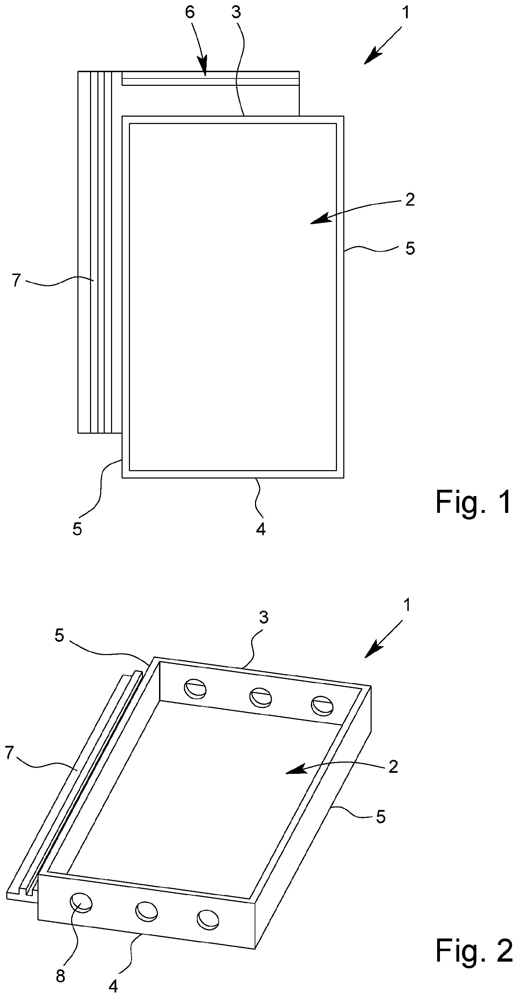

Es zeigt Fig. 1 einen erfindungsgemäßen Träger 1, welcher ein Grundkörper 2 aufweist.

Der Grundkörper 2 ist vorzugsweise rechteckig aufgebaut und weist einen in der Figurendarstellung nicht bezeichneten Boden, eine Kopfseite 3, eine Fußseite 4 und mindestens 2 Längsseiten 5 auf. Der Grundkörper 2 ist vorzugsweise rechteckig und in Form eines nach oben offenen Kastens ausgebildet. Der Grundkörper 2 ist geeignet zur Aufnahme und/oder Befestigung von Funktionselementen. Die Funktionselemente sind vorzugsweise ausgewählt aus Dachbegrünung, Photovoltaikmodulen, Solarthermiemodulen, Wärmepumpen, Klimageräten, Lüftungsgeräten und Blindelementen.

Der Grundkörper 2 weist vorzugsweise in der Figurendarstellung nicht dargestellte Funktionseinrichtungen auf, insbesondere Retentionseinrichtungen, Trenneinrichtungen, Befestigungseinrichtungen oder deren Mischungen. Als Retentionseinrichtung, um insbesondere Wasser auf der Dachfläche zurückzuhalten, eignen sich insbesondere Stege und Noppen. Als Trenneinrichtung eignen sich insbesondere Trennwände welche vorzugsweise über Nuten, insbesondere ein Nutsystem, variabel in dem Grundkörpers angebracht werden können. Hierzu sind vorzugsweise in regelmäßigen oder unregelmäßigen Abständen Nuten parallel zu der Längsseite 5 oder Kopfseiten 3 des Grundkörpers 2 vorgesehen. Über Nuten bzw. Nutsysteme können auch andere Funktionseinrichtungen, wie beispielsweise Befestigungseinrichtungen, flexibel in dem Grundkörper 2 untergebracht werden. Als Befestigungseinrichtung eignen sich insbesondere Einrichtungen zur Aufnahme bzw. Herstellung von Steck-, Klemm-, Rast oder Schraubverbindungen, mit deren Hilfe die Funktionselemente an dem Grundkörper 2 befestigt werden können. Die Befestigungseinrichtungen werden dabei vorzugsweise zur Befestigung von Funktionselementen verwendet.

Der Träger 1 weist vorzugsweise mindestens ein Falzteil, insbesondere ein Kopffalzteil 6 und/oder ein Seitenfalzteil 7 auf. Vorzugsweise weist der Träger 1 ein Kopffalzteil 6 und ein Seitenfalzteil 7 auf. Besonders gute Ergebnisse werden erhalten, wenn das Kopffalzteil 6 und das Seitenfalzteil 7 einstückig ausgebildet werden. Durch die Falzteile ist es zum einen möglich, mehrere Träger 1 zu einer zumindest bereichsweisen Dachdeckung zu kombinieren, wobei durch die Verfalzungen und Überlappungen der einzelnen Träger auf Dichtsysteme, wie beispielsweise Dichtungen oder Dichtlippen, verzichtet werden kann. Die Dichtigkeit wird wie bei Dachziegeln durch einfache Überlappung erreicht. Darüber hinaus ist der Träger 1 durch die Verfalzungen vorzugsweise auch mit üblichen Dacheindeckungen, insbesondere mit Dachpfannen, wie beispielsweise Dachziegeln und Dachbetonsteinen, kombinierbar, sodass der erfindungsgemäße Träger auch zur teilweisen Dacheindeckung von Bestandsgebäuden geeignet ist.

Fig. 2 zeigt eine perspektivische Darstellung des Trägers 1. Der Grundkörper des Träger 1 weist vorzugsweise Einrichtungen zur Weiterleitung von Flüssigkeiten und/oder Gasen 8, insbesondere Durchbrechungen, auf, insbesondere damit Flüssigkeiten und/oder Gase, wie beispielsweise Wasser und/oder Luft, von einem Grundkörper 2 in einen weiteren Grundkörper 2 gelangen können. Vorzugsweise weisen die Durchbrechungen zumindest an der Fußseite 4 noch rohrförmige Fortsätze auf, sodass die Weiterleitung beispielsweise von Wasser oder auch von Luft von einem Grundkörper 2 zu einem weiteren Grundkörper 2 nahe zu verlustfrei möglich ist.

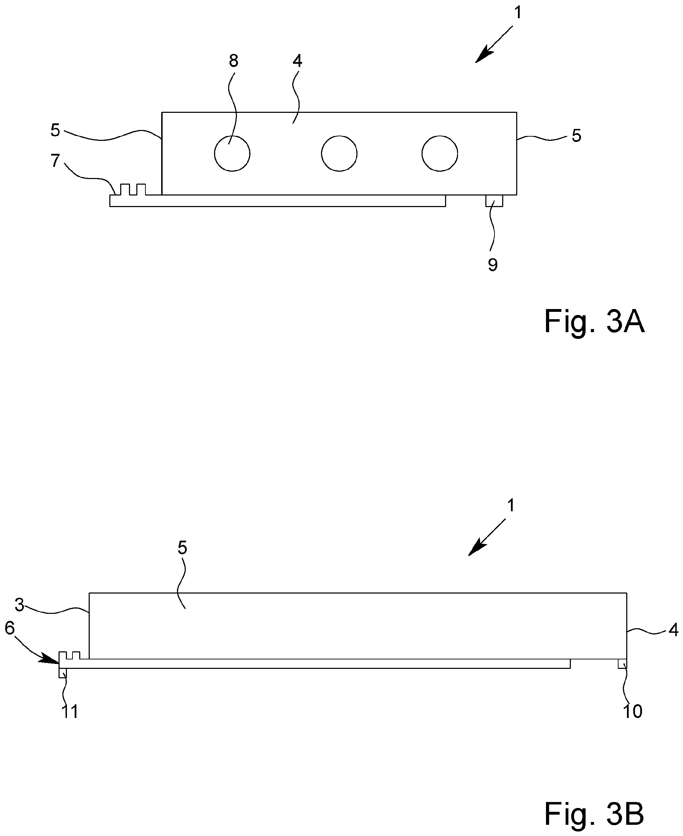

Zusätzlich zu dem Kopffalzteil 6 und dem Seitenfalzteil 7 weist der Träger 1 vorzugsweise noch mindestens eine Seitenfalzrippe 9 auf, welche zur Überlappung mit dem Seitenfalzteil 7 eines weiteren Trägers 1 oder einer üblichen Dacheindeckung geeignet ist, wie in Fig. 3a dargestellt.

Fig. 3b zeigt eine Sicht auf eine Längsseite 5 des Trägers 1. Der Träger 1 weist vorzugsweise mindestens eine Fußfalzrippe 10 auf, welche mit einem Kopffalzteil 6 eines weiteren Trägers 1 oder auch eines handelsüblichen Dachziegels überlappen kann. Durch die Falzteile und Rippen können die Träger 1, entsprechend Dachziegeln, innerhalb gewisser Grenzen verschoben werden, sodass eine vollflächige Dachdeckung unabhängig vom Abstand der Lattung, dem Abstand der Sparren sowie der Dachbreite erhalten werden kann.

Durch das in dem Grundkörper 2 vorzugsweise vorgesehene Nutsysteme ist es darüber hinaus auch möglich, den Träger 1 in seinen Abmessungen an die jeweiligen Gegebenheiten anzupassen, beispielsweise einzukürzen, um Dachauf- bzw. einbauten, wie beispielsweise Schornsteine oder Dachfenster, zu berücksichtigen.

Der Träger 1 weist vorzugsweise auch eine Aufhängenase 11 auf, welche zur Einhängung des Trägers an der Lattung dient.

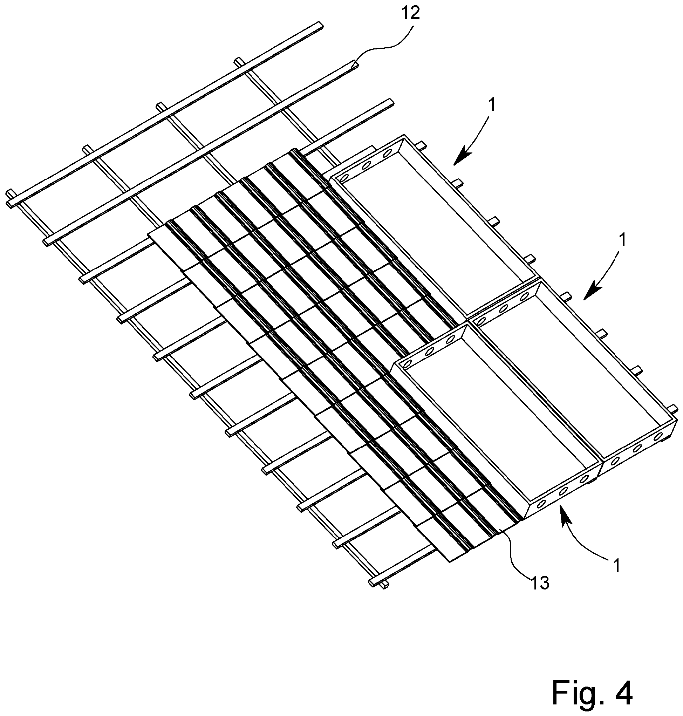

Es zeigt Fig. 4 ein Ausschnitt aus einen Dachaufbau mit einer Lattung 12, in welche bereichsweise Dachziegel 13 und erfindungsgemäße Träger 1 eingehängt sind. Die Träger 1 überlappen dabei sowohl mit weiteren Trägern 1 auch mit Ziegeln 13, sodass in dem dargestellten Bereich eine geschlossene Dachhaut gebildet wird.

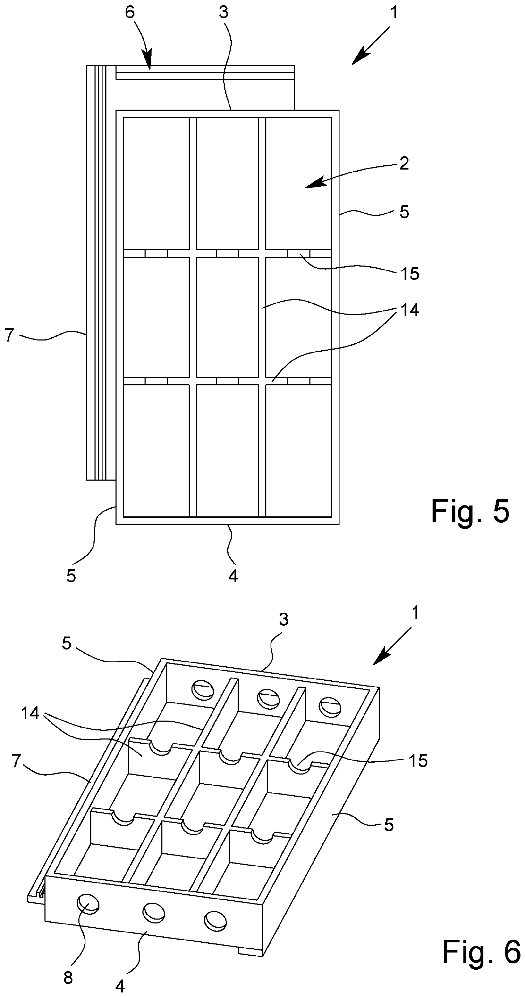

Es zeigt Fig. 5 die Draufsicht auf einen erfindungsgemäßen Träger 1, in welchen Trennwände 14 eingefügt sind. Die Trennwände 14 weisen jeweils Aussparungen 15 zur Weiterleitung von Flüssigkeiten und/oder Gasen auf. Durch die Trennwände 14 werden einzelne Parzellen, beispielweise zur Aufnahme von Pflanzkästen 16 geschaffen. Die Fig. 6 zeigt eine perspektivische Darstellung des erfindungsgemäßen Trägers 1 mit Trennwänden 14. Die Trennwände 14 können beispielsweise über ein Nutsystem mit dem Grundkörper 2 des Trägers 1 verbunden sein.

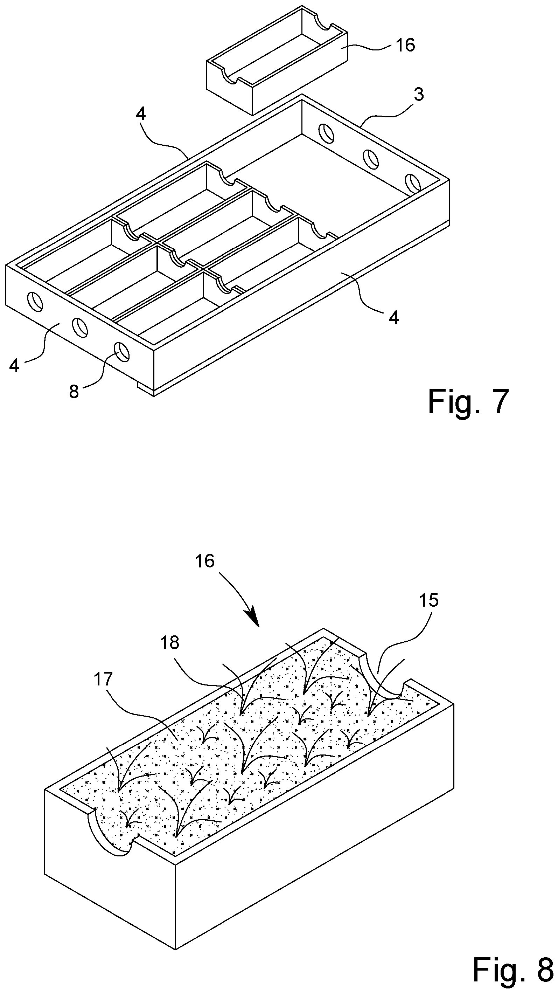

Es zeigt Fig. 7 eine weitere perspektivische Darstellung eines erfindungsgemäßen Trägers 1 mit Pflanzkästen 16. Gemäß der in Fig. 7 dargestellten bevorzugten Ausführungsform sind zwischen den Pflanzkästen 16 im dem Grundkörper 2 keine Trennwände 14 vorgesehen.

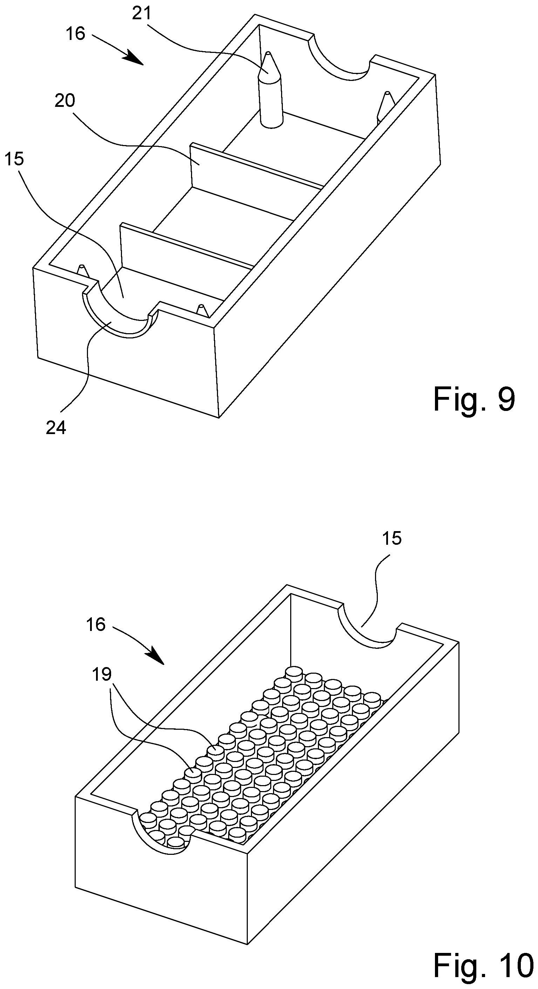

Die Pflanzkästen 16 enthalten vorzugsweise zumindest ein Substrat 17 sowie eine Bepflanzung 19, wie in Fig. 8 dargestellt. Die Pflanzkästen 16 werden vorzugsweise in bepflanzten Zustand in den Grundkörper 2 eingefügt, sodass gewährleistet werden kann, dass die Bepflanzung tatsächlich anwächst und nicht einige Pflanzkästen 16 unbepflanzt bleiben. Die wäre insbesondere ungünstig, da dann ein Dachdecker oder ein Gärtner das Dach betreten und die Kästen erneut bepflanzen müsste, was mit zusätzlichen Kosten verbunden wäre. Die Pflanzkästen 16 weisen vorzugsweise Aussparungen 15 zur Durch- bzw. Weiterleitung von Wasser von einem Pflanzkasten 16 in eine weiteren Pflanzkasten 16 auf. Vorzugsweise weisen die Aussparungen 15 der Pflanzkästen 16 zumindest an einer Seite einen Überlauf 24 auf, wie in Fig. 9 dargestellt. Der Überlauf 24 ist vorzugsweise derart ausgebildet, dass er mit er Aussparung 15 eines weiteren Pflanzkastens 16 vorzugsweise stoffschlüssig überlappt, sodass bei der Weiterleitung von Wasser aus einem Pflanzkasten 16 in einen weiteren Pflanzkasten 16 kein Wasser zwischen die Pflanzkästen 16 läuft.

Wie in Fig. 9 und 10 dargestellt, weisen die Pflanzkästen vorzugsweise funktionelle Einrichtungen auf. Bei den funktionellen Einrichtungen kann es sich insbesondere wie in Fig. 9 dargestellt um Stege 20 zu Zurückhaltung von Wasser, d.h. zur Retention, handeln. Vorzugsweise sind die Stege 20 derart angeordnet, dass gewährleistet ist, dass Regenwasser gleichmäßig in dem Pflanzkasten 16 zurückgehalten wird, sodass die gesamte Bepflanzung 18 ausreichend mit Wasser versorgt wird. Weiterhin können die funktionellen Einrichtungen auch Einrichtungen zur Fixierung von Textilmaterialien 21 sein, insbesondere in Form von Haken oder Dornen. Mit den Einrichtungen zur Fixierung von Textilmaterialien 21 können Textilmaterialien, insbesondere Gewirke, Gewebe oder Vliese, vorzugsweise Vliese, welche auf die Oberfläche des Substrat aufgebracht sind und das Substrat sowie die Bepflanzung bei Starkregen oder Wind vor einem Herausschwemmen oder einem Herauswehen aus den Pflanzkästen 16 schützen, in den Pflanzkästen 16 befestigt werden. Die funktionalen Eichrichtungen, insbesondere Wasserretentionseinrichtungen, können auch in Form von Noppen 19, wie in Fig. 10 dargestellt, ausgebildet sein. Auch ist es möglich, dass die beispielsweise Noppen 19 und Stege 20 zur Wasserretention in den Pflanzkästen 16 miteinander kombiniert werden.

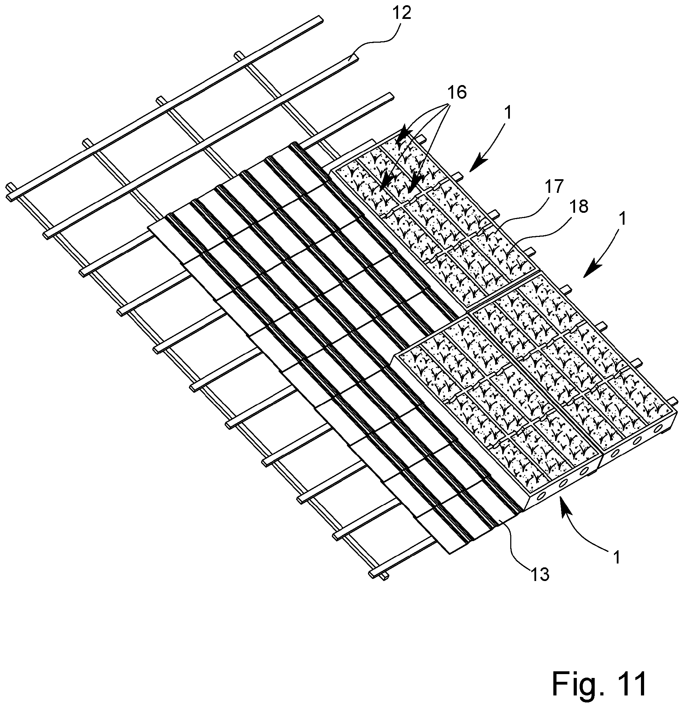

Es zeigt Fig. 11 ein Ausschnitt aus einer Dachstruktur mit einer Lattung 12 und einer bereichsweisen Eindeckung mit erfindungsgemäßen Trägern 1, welche mit einer Dachbegrünung, insbesondere Pflanzkästen 16, ausgestattet sind. Weitere Teile des Dachaufbaus sind mit Dachziegel 13 bedeckt.

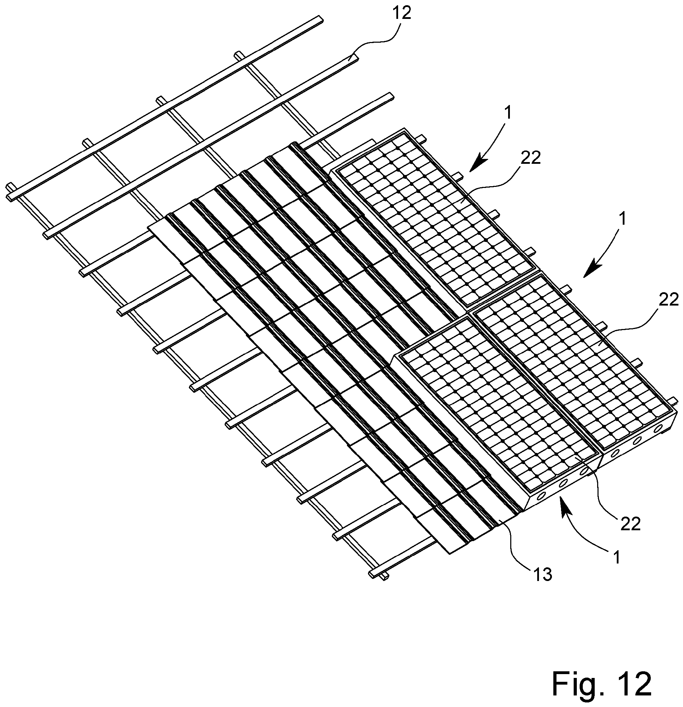

Neben der Ausstattung mit einer Dachbegrünung ist es auch möglich, die Träger 1 mit weiteren funktionalen Elementen auszurüsten, wie beispielsweise mit Solarmodulen 22. Es zeigt Fig. 12 ein Ausschnitt aus einer Dachstruktur mit einer Lattung 12, auf welche bereichsweise erfindungsgemäße Träger 1 aufgebracht sind, an welchen Solarmodule 22, insbesondere Photovoltaikmodule, befestigt sind. Weitere Teile des Daches sind mit herkömmlichen Dachziegeln 13 gedeckt. Durch den modularen Aufbau der erfindungsgemäßen Träger 1 kann einfach zwischen einem Gründach und einem Solardach gewechselt werden. Auch ist ein bereichsweiser Aufbau eines Dachs als Solardach und ein bereichsweiser Dachaufbau als Gründach ist möglich. Da die Grundkörper 2 an ihren Kopfseiten 3 und Fußseiten 4 vorzugsweise Durchbrechungen aufweisen, können die Solarmodule 22 durch einen Luftstrom, welcher unter den Solarmodulen 22 durch die Grundkörper 2 der Träger 1 entlang geführt wird, gekühlt werden, was die Effizienz der Solarmodule 22 erhöht.

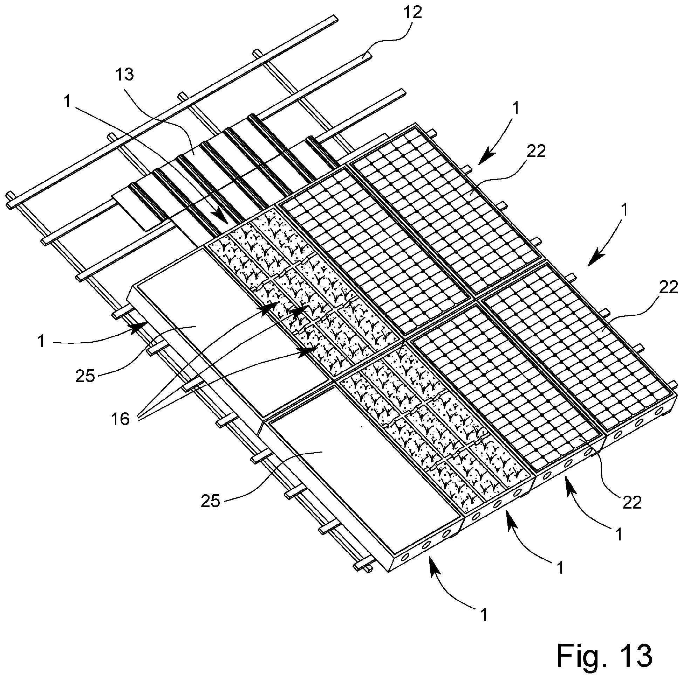

In Fig. 13 ist ein Ausschnitt aus einer Dachstruktur gezeigt, die großflächig mit erfindungsgemäßen Trägern 1 eingedeckt ist. Die Träger 1 sind jeweils mit Solarmodulen 22, Pflanzkästen 16 oder Blindelementen 25 ausgerüstet. Die Blindelementen 25 sind Blenden, die auf oder in dem Grundkörper 2 des Trägers 1 befestigt werden und für eine gleichmäßige und geschlossene Dachoberfläche sorgen. Die Blindelemente 25 können optisch an übliche Dacheindeckungen, wie beispielsweise Dachziegel 13 oder Bleche, angelehnt sein. Die Blindelemente 25 bestehen vorzugsweise aus Holz, Metall, Kunststoff oder deren Mischungen, vorzugsweise Metall, Kunststoff oder deren Mischungen. Besonders geeignet sind Verbundplatten aus Kunststoffen uns Aluminium, bei welchen Aluminiumbleche auf eine oder 2 Seiten einer Kunststoffplatte laminiert sind.

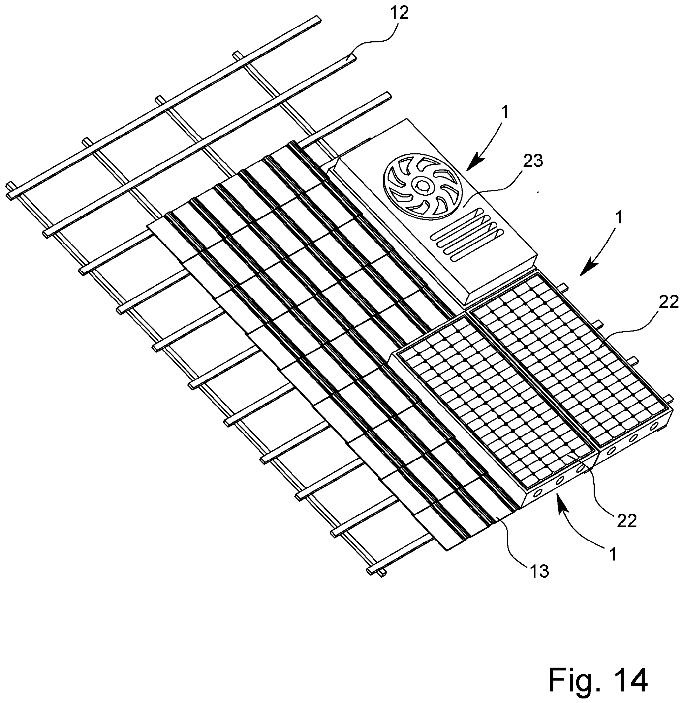

Fig. 14 zeigt wiederum einen Ausschnitt aus einen Dachaufbau, bei welchem ein Teil der Träger 1 mit Solarmodulen 22 bestückt ist sowie auch mit einer Wärmepumpe 23. Die Effizienz der Wärmepumpe 23 kann gesteigert werde, indem der unter den Solarmodulen 22 durchgeführte, erwärmte Luftstrom zum Betrieb der Wärmepumpe 23 genutzt wird.

Alternativ zu der liegenden Anbringung der Wärmepumpe 23 gemäß Fig. 14 ist es auch möglich, die Wärmepumpe mittels eines Halterungssystems, welche in einen Grundkörper 2 des Trägers 1 befestigt wird, aufrecht zu montieren und den erwärmten Luftstrom an den Kopfseiten 3 der mit Solarmodulen 22 versehenden Träger 1 zu sammeln und der Wärmepumpe 23 zuzuführen.

Der Träger 1 weist vorzugsweise eine Länge parallel zu den Längsseiten 5 des Grundkörpers im Bereich von 100 bis 150 cm, vorzugsweise 100 bis 130 cm, bevorzugt von 120 cm auf. Gleichermaßen kann es vorgesehen sein, dass der Träger eine Breite parallel zu der Kopfseite 3 bzw. der Fußseite 4 des Grundkörpers 2 im Bereich von 60 bis 100cm, vorzugsweise 70 bis 90 cm, bevorzugt etwa 80 cm, aufweist. Der Träger 1 weist somit vorzugsweise die Abmessungen einer Europalette auf, sodass ein besonders einfacher Transport der Träger möglich ist. Durch die großflächigen Abmessungen des Trägers 1 darüber hinaus auch möglich, ein Dach schnell, kostensparend und effizient einzudecken.

Was nun die Höhe des Trägers anbelangt, so ist es üblicherweise vorgesehen, dass der Träger eine Höhe im Bereich von 5 bis 15 cm, insbesondere 7 bis 12 cm, vorzugsweise 8 bis 11 cm, bevorzugt 10 cm, aufweist. Der erfindungsgemäße Träger 1 erhöht somit den Dachaufbau gegenüber herkömmlichen Ziegeln in nur relativ geringen Maße und gegenüber Dächern Photovoltaikanlagen oder Solarthermieanlagen überhaupt nicht.

Der Träger 1 wird vorzugsweise aus Kunststoffen hergestellt, insbesondere faserverstärkten, vorzugsweise glasfaserverstärkten, Kunststoffen. Auf diese Weise ist sichergestellt, dass der Träger 1 sehr leicht ist und selbst mit einer Bepflanzung die Dachkonstruktive nicht stärker belastet als ein übliches Ziegeldach. Darüber hinaus kann ein derart leichter Träger 1 einfach und unkompliziert, insbesondere ohne maschinelle Unterstützung, bewegt und auf einem Dach verbaut werden.

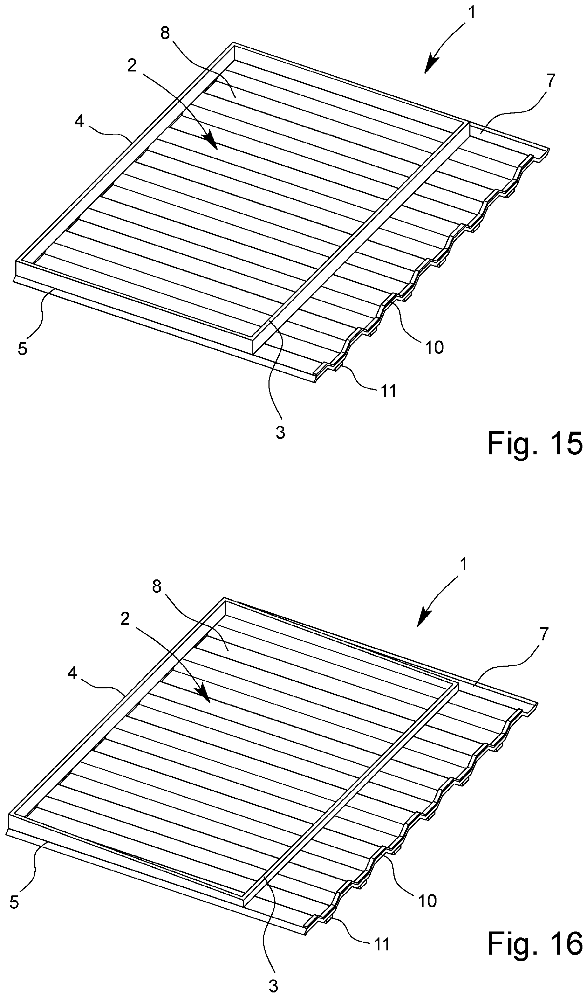

Die Fig. 15 zeigt eine alternative bevorzugte Ausführungsform des erfindungsgemä-ßen Trägers 1. Der erfindungsgemäße Träger 1 weist einen Grundkörper 2 auf. Der Grundkörper 2 ist vorzugsweise rechteckig aufgebaut, wobei der Grundkörper insbesondere breiter als tiefer bzw. länger ist. Der Grundkörper 2 ist vorzugsweise in Form eines nach oben offenen Kastens ausgebildet. Die Seitenwände der Grundkörpers 2 sind dabei so ausgebildet, dass alle Seitenwände dieselbe Höhe aufweisen, d.h. ein Grundkörper 2 mit einer einheitlichen Seitenwandhöhe erhalten wird.

Im Rahmen dieser bevorzugten Ausführungsform weist der Grundkörper vorteilhaft in den Grundkörper, insbesondere in den Boden des Grundkörpers, integrierte Einrichtungen zur Weiterleitung für Flüssigkeiten und/oder Gasen 8 auf. Diese Einrichtungen zur Weiterleitung für Flüssigkeiten und/oder Gasen 8 sind vorzugsweise in Form von in den Grundkörper bzw. insbesondere dessen Boden integrierten Leitungen oder Rinnen ausgebildet. Die integrierten Einrichtungen 8 erstrecken sich vorteilhaft von der Kopfseite 3 zur Fußseite 4 des Trägers 1 entlang des Grundköpers 2.

Vorteilhaft weist der Grundkörper 2 bzw. insbesondere dessen Boden mehrere Einrichtungen 8 aufweist und sind diese in regelmäßigen Abständen in dem Grundkörper(-boden) 2 verteilt angeordnet, so dass diese in einem Verbund erfindungsgemä-ßer Träger bündig miteinander angeordnet werden können und bspw. (Regen-)Wasser zuverlässig unterhalb eventueller Einsatz- bzw. Pflanzkästen in dem Grundkörper(-boden) gesammelt sowie transportiert und bspw. in eine Regenrinne geleitet werden kann.

Im Rahmen der in Fig. 15 gezeigten bevorzugten Ausführung der vorliegenden Erfindung sind die Einrichtungen 8 so ausgestaltet, dass der Grundkörper 2, insbesondere in den Boden des Grundkörpers, integrierte Einrichtungen 8 in Form eines Trapezbleches aufweist bzw. der Grundkörper(-boden) 2 eine Mehr- bzw. Vielzahl von alternierenden Obergurten und Untergurten aufweist. Hierbei bilden die Untergurte vorteilhaft die in den Grundkörper(-boden) 2 integrierten Einrichtungen 8.

In den Untergurten kann dabei überschüssige Flüssigkeit zuverlässig gesammelt sowie abgeleitet werden. Der Grundkörper 2 bzw. insbesondere die Trapezbleche, mehrerer Träger 1 können vorteilhaft so angeordnet werden, dass Ober- und Untergurte kontinuierlich ineinander übergehen, d.h. sich über die gesamte abgedeckte Fläche erstrecken, so dass Flüssigkeit gezielt und kontinuierlich vom Dach abgeleitet werden kann, ohne dass sich überschüssige Flüssigkeit anstauen kann. Gleichermaßen vorteilhaft ist eine vergleichsweise intensive Belüftung eventueller Funktionselemente, bspw. von Einsetz- bzw. Pflanzkästen 16 oder auch von in dem Träger angeordneten PV- oder Solarthermieanlagen oder -modulen 22 möglich.

Neben den Einrichtungen 8 weist der Grundkörper 2 des Trägers 1 gemäß dieser bevorzugten Ausführung außerdem auch eine Kopfseite 3, eine Fußseite 4 und mindestens zwei Längsseiten 5 auf. Der Grundkörper 2 ist geeignet zur Aufnahme und/oder Befestigung von Funktionselementen. Die Funktionselemente sind vorzugsweise ausgewählt aus Dachbegrünung, Photovoltaikmodulen, Solarthermiemodulen, Wärmepumpen, Klimageräten, Lüftungsgeräten und Blindelementen.

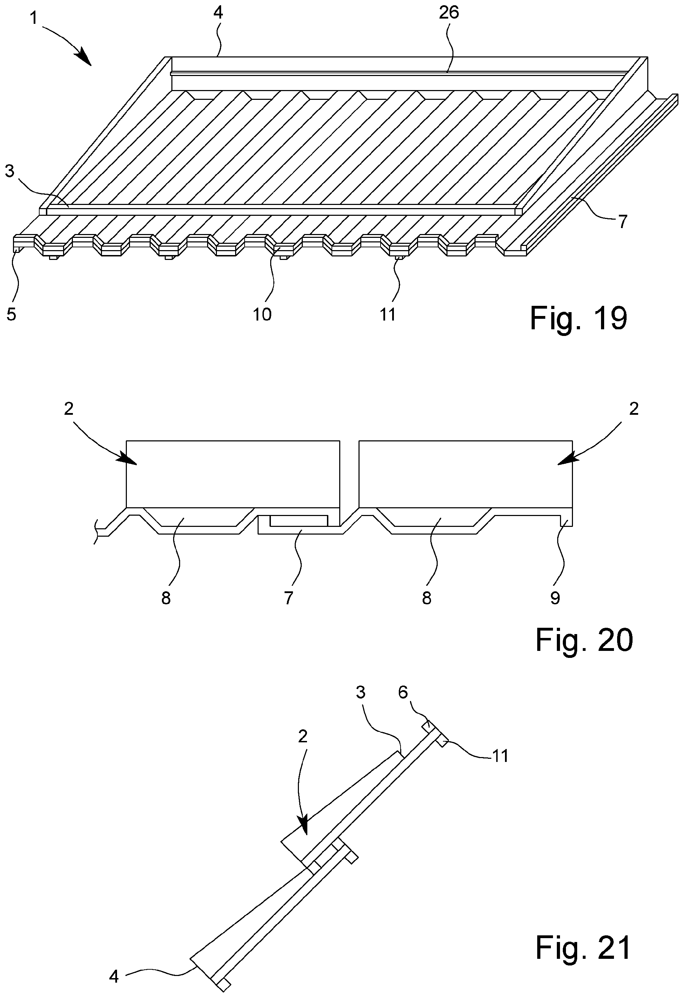

Der Träger 1 weist zudem vorzugsweise mindestens ein Falzteil, insbesondere ein Kopffalzteil 6 (vgl. Fig. 21) und/oder ein Seitenfalzteil 7 auf. Vorzugsweise weist der Träger 1 ein Kopffalzteil 6 und ein Seitenfalzteil 7 auf. Besonders gute Ergebnisse werden erhalten, wenn das Kopffalzteil 6 und das Seitenfalzteil 7 einstückig ausgebildet werden, ein zweistückiger Aufbau ist jedoch gleichermaßen bevorzugt.

Der Träger 1 weist außerdem vorzugsweise mindestens eine Fußfalzrippe 10 auf, welche mit einem Kopffalzteil 6 eines weiteren Trägers 1 (vgl. Fig. 21) oder auch eines handelsüblichen Dachziegels überlappen kann. Gleichermaßen sind die Falzteile 7 so ausgebildet, dass diese miteinander überlappen (vgl. Fig. 20). Durch die Falzteile und Rippen können die Träger 1, entsprechend Dachziegeln, innerhalb gewisser Grenzen verschoben werden, sodass eine vollflächige Dachdeckung unabhängig vom Abstand der Lattung, dem Abstand der Sparren sowie der Dachbreite erhalten werden kann.

Der Träger 1 weist zudem vorzugsweise auch eine Aufhängenase 11 auf, welche zur Einhängung des Trägers an der Lattung dient.

Im Rahmen einer weiteren alternativen Ausführung der vorliegenden Erfindung, welche in Fig. 16 wiedergegeben ist, hat es sich bewährt, wenn die Seitenwände insbesondere der Kopfseite 3 und Fußseite 4 des Grundkörpers 2 unterschiedliche Höhen aufweisen. Dies bedeutet, dass die Seiten, die dazu vorgesehen sind, im Anwendungsfall bei Installation des erfindungsgemäßen Trägers 1 auf einem Dach, First (Kopfseite 3) bzw. Traufe (Fußseite 4) zugewandt zu sein, unterschiedliche Höhen aufweisen.

Vorzugsweise weist dabei die Kopfseite bzw. die dem First zugewandte Seite 3 eine geringere Höhe als die Fußseite bzw. die der Traufe zugewandte Seite 4 auf. Diesbezüglich hat es sich beispielsweise bewährt, wenn die Differenz der Höhen von Kopf- und Fußseite 3,4 des Grundkörpers 2 in einem Bereich von 0,3 bis 7 cm, insbesondere 0,5 bis 5,5 cm, vorzugsweise 0,75 bis 4,5 cm, bevorzugt 1 bis 4 cm, liegt. Die Kopf- und Fußseite verknüpfenden Seitenwände bzw. die Längsseiten 5 des Grundkörpers 2 sind in dieser Ausführungsform so beschaffen, dass die Höhendifferenz überbrückt bzw. ausgeglichen wird, d.h. die Seitenwände bzw. Längsseiten 5 weisen eine von der Kopf- zur Fußseite 3,4 zunehmende Höhe auf, sind also im Wesentlichen keilförmig ausgebildet.

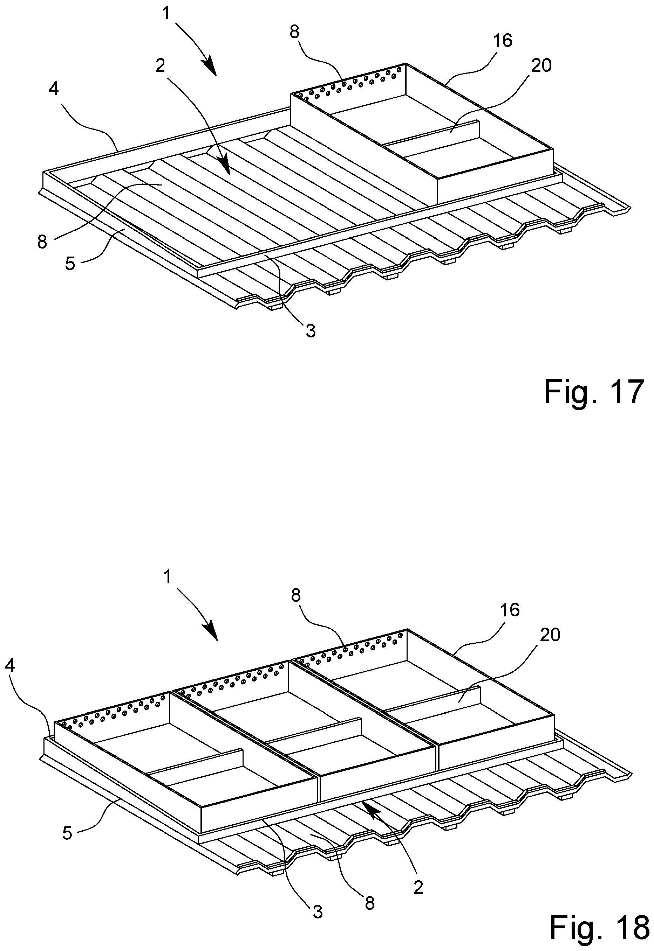

In den Träger 1 gemäß der bevorzugten Ausführungsform entsprechend den Fig. 15 und 16 können ein oder mehrere Funktionselemente, insbesondere Einsatz- bzw. Pflanzkästen 16, eingesetzt werden, wie in den Fig. 17 und 18 gezeigt.

Wie in Fig.17 und 18 dargestellt, weisen die Pflanzkästen 16 vorzugsweise auch funktionelle Einrichtungen auf, wie bspw. Stege 20 zu Zurückhaltung von Wasser, d.h. zur Retention. Vorzugsweise sind die Stege 20 dabei derart angeordnet, dass gewährleistet ist, dass Regenwasser gleichmäßig in dem Pflanzkasten 16 zurückgehalten wird, sodass die gesamte Bepflanzung ausreichend mit Wasser versorgt wird.

Zudem hat es sich im Rahmen der Ausführungsform gemäß den Fig. 17 und 18 bewährt, wenn die Einsatz- bzw. Pflanzkästen 16 selbst ebenfalls bzw. zusätzlich zum Grundkörper 2 zur Ableitung von überschüssiger Flüssigkeit mit Einrichtungen 8 zur Weiterleitung für Flüssigkeiten versehen sind, insbesondere in Form von Durchlassöffnungen in den Außenwänden der Einsetz- bzw. Pflanzkästen 16. Vorzugsweise sind die Einrichtungen 8 traufseitig bzw. in Richtung der Fußseite 4 angeordnet, um eine effektive Weiter- bzw. Ableitung von Flüssigkeit zu gewährleisten.

Wie in Fig. 19 dargestellt, hat es sich für die Befestigung von Einsatz- bzw. Pflanzkästen 16 bzw. auch von anderen funktionalen Elementen, wie PV- oder Solarthermiemodulen 22, bewährt, wenn der Grundkörper 2 insbesondere kopf- und/oder fußseitig 3,4 ein oder mehrere Befestigungseinrichtungen aufweist. Vorzugsweise ist dabei fußseitig, insbesondere entlang der Fußseite 4 des Grundkörpers 2, eine, insbesondere innenliegende, Befestigungsschiene 26 in dem Grundkörper 2 angeordnet. Entlang dieser Befestigungsschiene 26 können die Einsatz- bzw. Pflanzkästen 16 mit dem Grundkörper 2 bzw. Träger 1 verbunden und fixiert werden.

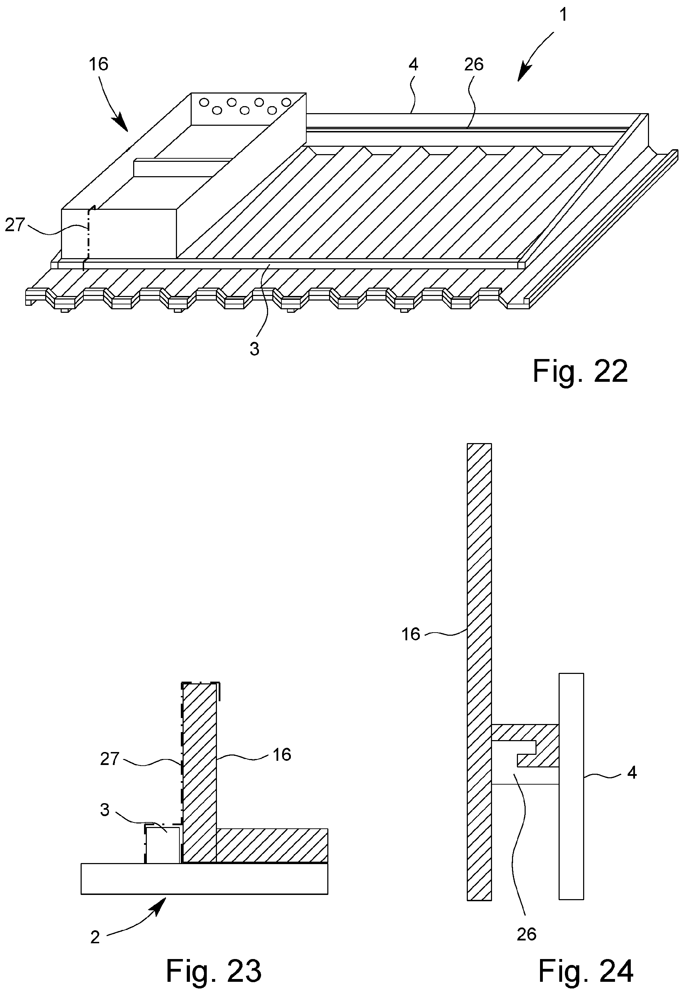

Bevorzugt ist hierbei eine lösbare Verbindung von Funktionselement und Grundkörper 2. Die Befestigung kann daher beispielsweise mittels Klemmverbindungen, Steckverbindungen, Rastverbindungen, Schraubverbindungen oder deren Mischungen und/oder über einen Einhäng- bzw. Einhakmechanismus erfolgen (vgl. Fig. 24). Der Einsatz- bzw. Pflanzkasten 16 verfügt in diesem Fall vorteilhaft über eine entsprechend komplementär ausgebildete Einhäng- bzw. Einhakschiene 26. Auf diese Weise wird leicht und flexibel eine sicherer Anordnung von Einsatz- bzw. Pflanzkästen 16 in dem erfindungsgemäßen Grundkörper 2 bzw. Träger 1 erreicht. Vorteilhaft sind hierbei keine Bohrungen oder zusätzlichen Befestigungsmittel wie Schrauben oder dergleichen erforderlich.

Gemäß der in Fig. 22 gezeigten weiteren bevorzugten Ausführungsform der vorliegenden Erfindung ist zudem vorgesehen, dass kopfseitig des Grundkörpers 2 Befestigungseinrichtungen vorgesehen sind. Bevorzugt sind diese als einzelne, lösbar mit dem Träger 1 verbindbare bzw. verbundene, Befestigungselemente 27 ausgebildet. Besonders bevorzugt sind diese Befestigungselemente 27 Befestigungsklammern bzw. -klemmen.

Diese Befestigungsklammern sind dabei so beschaffen, dass diese unter den kopfseitigen Rahmen des erfindungsgemäßen Trägers 1 und/oder über den Rand eines Funktionselements, insbesondere eines Einsatz- bzw. Pflanzkastens 16, reichen (vgl. Fig. 23). Die Klemmen können demnach vorteilhaft insbesondere im Bereich von Leitungen bzw. Rinnen oder auch Untergurten im Boden des Grundkörpers des erfindungsgemäßen Trägers angewendet und dort an der Kopfseite 3 des Grundkörpers 2 angebracht werden.

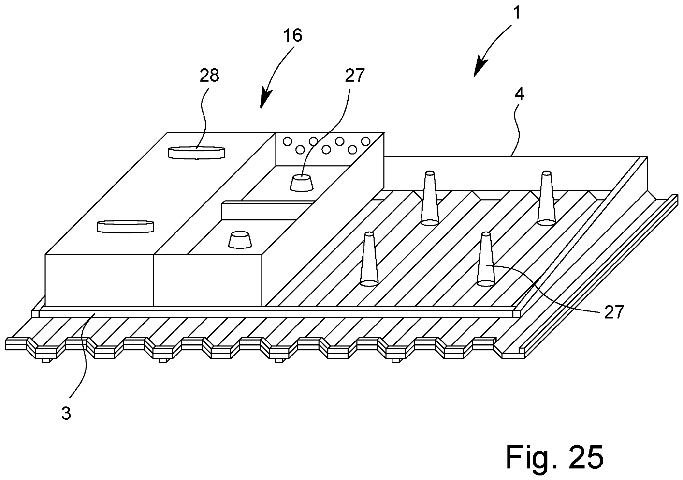

Darüber hinaus ist es, wie in Fig 25 auch möglich, zusätzliche Befestigungseinrichtungen bzw. -elemente 27, wie etwa Befestigungsschienen, auf dem Grundkörper vorzusehen, insbesondere wenn eine besonders widerstandsfähige bzw. äußerst belastbare Verbindung von Träger und Funktionselement erforderlich ist. In der Ausführung gemäß Fig. 25 sind dabei auf dem Grundkörper 2 Befestigungseinrichtungen bzw. -elemente 27 für sog. Befestigungsteller 28 vorgesehen bzw. insbesondere zur Aufnahme dieser ausgebildet, wodurch wiederum eine besonders widerstandsfähige und belastbare zusätzliche Sicherung von Funktionselementen in dem Träger erreicht werden kann.

**Bezugszeichenliste:**

| | | | |
|---|---|---|---|
| 1 | Träger | 16 | Einsetz- bzw. Pflanzkasten |
| 2 | Grundkörper | 17 | Substrat |
| 3 | Kopfseite | 18 | Bepflanzung |
| 4 | Fußseite | 19 | Noppe |
| 5 | Längsseite | 20 | Steg |
| 6 | Kopffalzteil | 21 | Einrichtung zur Fixierung von Textilmaterialien |
| 7 | Seitenfalzteil | | |
| 8 | Einrichtung zur Weiterleitung von Flüssigkeiten und/oder Gasen | 22 | Solarmodul |
| | | 23 | Wärmepumpe |
| 9 | Seitenfalzrippe | 24 | Überlauf |
| 10 | Fußfalzrippe | 25 | Blindelement |
| 11 | Aufhängenase | 26 | Befestigungsschiene |
| 12 | Lattung | 27 | Befestigungseinrichtung |
| 13 | Dachziegel | | bzw. -element |
| 14 | Trennwand | 28 | Befestigungsteller |
| 15 | Aussparung | | |

## Patentansprüche

1. Träger (1) zur zumindest bereichsweisen Eindeckung von Schrägdächern und/oder zur Verkleidung von Bauwerken, vorzugsweise zur zumindest bereichsweisen Eindeckung von Schrägdächern,
**dadurch gekennzeichnet,**
**dass** der Träger einen Grundkörper (2) zur Aufnahme und/oder Befestigung von Funktionselementen aufweist.

2. Träger (1) nach Anspruch 1, **dadurch gekennzeichnet, dass** das Funktionselement ausgewählt ist aus Dachbegrünung, Photovoltaikmodulen, Solarthermiemodulen, Wärmepumpen, Klimageräten, Lüftungsgeräten und Blindelementen.

3. Träger (1) nach Anspruch 1 oder 2, **dadurch gekennzeichnet, dass** der Grundkörper (2) in Form eines nach oben offenen Kastens vorliegt.

4. Träger nach einem der Ansprüche 1 bis 3, **dadurch gekennzeichnet, dass** der Grundkörper (2) funktionale Einrichtungen aufweist, insbesondere in Form von Retentionseinrichtungen, Trenneinrichtungen, Befestigungseinrichtungen oder deren Mischungen.

5. Träger nach Anspruch 4, **dadurch gekennzeichnet, dass** die Befestigungseinrichtungen, insbesondere Einrichtungen zur Befestigung der Funktionselemente, ausgewählt sind aus Einrichtungen zur Herstellung von Klemmverbindungen, Steckverbindungen, Rastverbindungen, Schraubverbindungen oder deren Mischungen.

6. Träger (1) nach einem der vorangehenden Ansprüche, **dadurch gekennzeichnet, dass** der Grundkörper (1) ein Nutsystem aufweist.

7. Träger (1) nach einem der vorangehenden Ansprüche, **dadurch gekennzeichnet, dass** der Träger (1) Einrichtungen zur Weiterleitung von Flüssigkeiten und/oder Gasen, insbesondere Wasser und/oder Luft, aufweist.

8. Träger (1) nach Anspruch 7, **dadurch gekennzeichnet, dass** der Träger (1) in den Grundkörper (2), insbesondere in den Boden des Grundkörpers (2), integrierte Einrichtungen zur Weiterleitung von Flüssigkeiten und/oder Gasen, insbesondere Wasser und/oder Luft, aufweist, insbesondere wobei die, insbesondere in den Grundkörperboden, integrierten Einrichtungen ausgewählt sind aus Leitungen und/oder Rinnen.

9. Träger (1) nach einem der vorangehenden Ansprüche, **dadurch gekennzeichnet, dass** der Träger (1) mit einer üblichen Dacheindeckung kombinierbar ist, insbesondere bereichsweise kombinierbar ist.

10. Träger (1) nach einem der vorangehenden Ansprüche, **dadurch gekennzeichnet, dass** der Träger (1) mindestens eine Befestigungseinrichtung zur Befestigung des Trägers (1) an einem Schrägdach oder einem Bauwerk und/oder zur Befestigung des Trägers an mindestens einem weiteren Träger (1) und/oder einer üblichen Dacheindeckung aufweist.

11. Träger (1) nach einem der vorangehenden Ansprüche, **dadurch gekennzeichnet, dass** der Grundkörper (2) zur Aufnahme eines oder mehrerer, vorzugsweise mehrerer Pflanzkästen (16), ausgebildet ist.

12. Träger (1) nach einem der vorangehenden Ansprüche, **dadurch gekennzeichnet, dass** der Träger (1) eine Länge im Bereich von 100 bis 150 cm, vorzugsweise 100 bis 130 cm, bevorzugt 120 cm, aufweist und/oder der Träger (1) eine Breite im Bereich von 60 bis 100 cm, vorzugsweise 70 bis 90 cm, bevorzugt 80 cm, aufweist.

13. Träger (1) nach einem der vorangehenden Ansprüche, **dadurch gekennzeichnet, dass** der Grundkörper (2) die Abmessungen eines Solarmoduls aufweist oder dass die Länge und/oder Breite des Grundkörpers (2) der halben Länge und/oder der halben Breite eines Solarmoduls entspricht.

14. Träger (1) nach einem der vorangehenden Ansprüche, **dadurch gekennzeichnet, dass** der Träger (1) eine Höhe im Bereich von 5 bis 15 cm, insbesondere 7 bis 12 cm, vorzugsweise 8 bis 11 cm, bevorzugt 10 cm, aufweist.

15. Verwendung eines Trägers nach einem der Ansprüche 1 bis 14 zur zumindest bereichsweisen Eindeckung von Steildächern oder Bauwerken, vorzugsweise zur zumindest bereichsweisen Eindeckung von Steildächern.

16. Steildach, aufweisend eine zumindest bereichsweise Eindeckung mit Trägern nach einem der Ansprüche 1 bis 14.
